(19)

Europäisches
Patentamt

European
Patent Office

Office européen
des brevets

(11) **EP 4 414 472 A1**

(12) **EUROPEAN PATENT APPLICATION**
published in accordance with Art. 153(4) EPC

(43) Date of publication:
**14.08.2024 Bulletin 2024/33**

(21) Application number: **22878500.2**

(22) Date of filing: **04.10.2022**

(51) International Patent Classification (IPC):
**C22C 38/00** (2006.01)    **C22C 38/60** (2006.01)
**C21C 7/068** (2006.01)    **C21D 8/10** (2006.01)
**C21D 9/08** (2006.01)

(52) Cooperative Patent Classification (CPC):
**C22C 38/00; C22C 38/60;** C21C 7/068; C21D 8/10;
C21D 9/08; Y02C 20/40

(86) International application number:
**PCT/JP2022/037065**

(87) International publication number:
**WO 2023/058631 (13.04.2023 Gazette 2023/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.10.2021   JP 2021163436**

(71) Applicant: **NIPPON STEEL CORPORATION
Chiyoda-ku
Tokyo 100-8071 (JP)**

(72) Inventors:
• **MATSUO, Daisuke**
  **Tokyo 100-8071 (JP)**
• **ARAI, Yuji**
  **Tokyo 100-8071 (JP)**

(74) Representative: **Zimmermann & Partner
Patentanwälte mbB
Postfach 330 920
80069 München (DE)**

(54) **DUPLEX STAINLESS STEEL MATERIAL**

(57)    A duplex stainless steel material that has excellent general corrosion resistance and pitting resistance in a supercritical corrosive environment in which SOx gas and $O_2$ gas are contained in a supercritical $CO_2$ gas is provided. A duplex stainless steel material of the present disclosure has the chemical composition described in the description, and in the duplex stainless steel material, on a precondition that the content of each element is within a range described in the description, Fn defined by Formula (1) is 57.0 or more, and a total number per 1 $mm^2$ of Mn sulfides having an equivalent circular diameter of 1.0 $\mu$m or more and Ca sulfides having an equivalent circular diameter of 2.0 $\mu$m or more is 0.50 /$mm^2$ or less.

$$Fn = Cr+3.3(Mo+0.5W)+16N+2Ni+Cu+2Co+10Sn...(1)$$

Where, the content in mass% of a corresponding element is substituted for each symbol of an element in Formula (1).

EP 4 414 472 A1

FIG. 1

**Description**

TECHNICAL FIELD

The present disclosure relates to a duplex stainless steel material, and more particularly to a duplex stainless steel material which can be applied to carbon dioxide capture, utilization and storage technology (CCUS).

BACKGROUND ART

An increase in the concentration of carbon dioxide above ground is currently a global problem. Further, efforts to suppress carbon dioxide emissions are proceeding. One such effort to suppress carbon dioxide emissions that is attracting particular attention is CCUS.

CCUS is an abbreviation for "carbon dioxide capture, utilization and storage". As mentioned above, CCUS includes the three technologies of capturing, utilizing, and storing carbon dioxide. Among these, as technology for storing carbon dioxide, technology which captures carbon dioxide emitted from an industrial facility such as an electric power plant or a factory, and utilizes steel pipes to drive the carbon dioxide into a depleted oil well and store the carbon dioxide therein is attracting attention. The steel pipes utilized for such storage technology are utilized in a corrosive environment such as a depleted oil well. Therefore, there is a need for steel pipes that are utilized for such storage technology to be excellent in corrosion resistance in a corrosive environment.

A duplex stainless steel material which has a duplex micro-structure of ferrite and austenite is known as a steel material that is excellent in corrosion resistance in a corrosive environment. Duplex stainless steels are disclosed in, for example, Japanese Patent Application Publication No. 5-132741 (Patent Literature 1) and Japanese Patent Application Publication No. 9-195003 (Patent Literature 2).

The duplex stainless steel material disclosed in Patent Literature 1 has a chemical composition consisting of, in mass%, C: 0.03% or less, Si: 1.0% or less, Mn: 1.5% or less, P: 0.040% or less, S: 0.008% or less, sol. Al: 0.040% or less, Ni: 5.0 to 9.0%, Cr: 23.0 to 27.0%, Mo: 2.0 to 4.0%, W: more than 1.5 to 5.0%, and N: 0.24 to 0.32%, with the balance being Fe and unavoidable impurities, in which PREW (= Cr + 3.3(Mo + 0.5W) + 16N) is 40 or more.

The duplex stainless steel material disclosed in Patent Literature 2 includes, in mass%, C: 0.12% or less, Si: 1% or less, Mn: 2% or less, Ni: 3 to 12%, Cr: 20 to 35%, Mo: 0.5 to 10%, W: more than 3 to 8%, Co: 0.01 to 2%, Cu: 0.1 to 5%, and N: 0.05 to 0.5%, with the balance being Fe and unavoidable impurities.

In the duplex stainless steel materials disclosed in Patent Literature 1 and Patent Literature 2, corrosion resistance is enhanced by adjusting the chemical composition.

CITATION LIST

PATENT LITERATURE

Patent Literature 1: Japanese Patent Application Publication No. 5-132741
Patent Literature 2: Japanese Patent Application Publication No. 9-195003

SUMMARY OF INVENTION

TECHNICAL PROBLEM

In this connection, in the aforementioned technology for storing carbon dioxide, in order to inject $CO_2$ into a depleted oil well, the $CO_2$ to be injected into a steel pipe is compressed and pressurized to place the $CO_2$ in a supercritical state. $CO_2$ captured from an industrial facility such as an electric power plant or a factory contains SOx and $O_2$. SOx dissolves in water to form sulfuric acid, and causes general corrosion to occur on the surface of steel material. Further, $O_2$ causes pitting to occur. Therefore, supercritical $CO_2$ in which SOx and $O_2$ are contained forms an extremely severe corrosive environment. In the present description, supercritical $CO_2$ in which SOx and $O_2$ are contained is referred to as a "supercritical corrosive environment".

A steel material used in a supercritical corrosive environment needs to have more excellent general corrosion resistance and pitting resistance than a steel material used in a conventional corrosive environment. The duplex stainless steel materials disclosed in Patent Literatures 1 and 2 were not designed on the assumption of use in such kind of supercritical corrosive environment.

An objective of the present disclosure is to provide a duplex stainless steel material which has excellent general corrosion resistance and excellent pitting resistance in a supercritical corrosive environment.

SOLUTION TO PROBLEM

The duplex stainless steel material according to the present disclosure consists of, in mass%,

C: 0.050% or less,
Si: 1.00% or less,
Mn: 0.80% or less,
P: 0.050% or less,
S: 0.0050% or less,
Cr: 25.00 to 27.00%,
Cu: 0.10 to 2.50%,
Ni: 5.00 to 8.50%,
Mo: 2.00 to 4.50%,
W: 1.50 to 3.00%,
N: 0.150 to 0.350%,
Co: 0.10 to 1.00%,
Sn: 0.001 to 0.050%,
sol. Al: 0.050% or less,
V: 0.01 to 0.50%,
Ti: 0.001 to 0.050%,
Ca: 0.0010 to 0.0100%,
B: 0.0020 to 0.0050%,
O: 0.0100% or less,
Mg: 0 to 0.0100%,
rare earth metal: 0 to 0.0100%,
Zr: 0 to 0.0100%,
Nb: 0 to 0.500%,
As: 0 to 0.0500%,
Zn: 0 to 0.0100%,
Pb: 0 to 0.0100%,
Sb: 0 to 0.0100%, and
with the balance being Fe and impurities,
wherein:

on a precondition that a content of each of the elements is within a range described above, Fn defined by Formula (1) is 57.0 or more; and
in the duplex stainless steel material,
a total number per 1 mm$^2$ of Mn sulfides having a Mn content of 10% or more in mass%, an S content of 10% or more in mass%, and an equivalent circular diameter of 1.0 $\mu$m or more, and Ca sulfides having a Ca content of 20% or more in mass%, an S content of 10% or more in mass%, a Mn content of less than 10% in mass%, and an equivalent circular diameter of 2.0 $\mu$m or more is 0.50 /mm$^2$ or less;

$$Fn = Cr+3.3(Mo+0.5W)+16N+2Ni+Cu+2Co+10Sn...(1)$$

where, a content in mass% of a corresponding element is substituted for each symbol of an element in Formula (1).

ADVANTAGEOUS EFFECTS OF INVENTION

The duplex stainless steel material according to the present disclosure has excellent general corrosion resistance and excellent pitting resistance in a supercritical corrosive environment.

BRIEF DESCRIPTION OF DRAWING

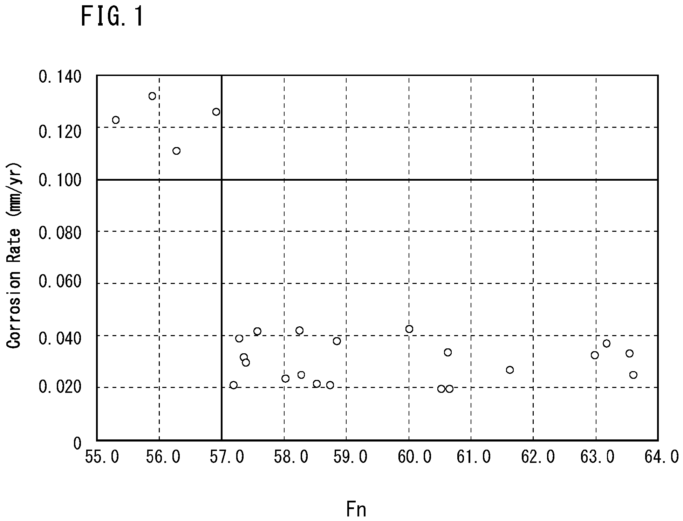

[FIG. 1] FIG. 1 is a view illustrating the relation between Fn in duplex stainless steel materials in which the content of each element in the chemical composition is within the range of the present embodiment, and a corrosion rate (mm/yr) which is an index of general corrosion resistance.

DESCRIPTION OF EMBODIMENTS

The present inventors conducted studies with regard to a duplex stainless steel material that has excellent general corrosion resistance and pitting resistance in a supercritical corrosive environment in which SOx gas and $O_2$ gas are contained in a supercritical $CO_2$ gas.

First, the present inventors conducted studies with regard to a steel material having excellent general corrosion resistance and excellent pitting resistance in a supercritical corrosive environment from the viewpoint of the chemical composition. As a result, the present inventors considered that if a steel material has a chemical composition containing, in mass%, C: 0.050% or less, Si: 1.00% or less, Mn: 0.80% or less, P: 0.050% or less, S: 0.0050% or less, Cr: 25.00 to 27.00%, Cu: 0.10 to 2.50%, Ni: 5.00 to 8.50%, Mo: 2.00 to 4.50%, W: 1.50 to 3.00%, N: 0.150 to 0.350%, Co: 0.10 to 1.00%, Sn: 0.001 to 0.050%, sol. Al: 0.050% or less, V: 0.01 to 0.50%, Ti: 0.001 to 0.050%, B: 0.0020 to 0.0050%, O: 0.0100% or less, Mg: 0 to 0.0100%, rare earth metal: 0 to 0.0100%, Zr: 0 to 0.0100%, Nb: 0 to 0.500%, As: 0 to 0.0500%, Zn: 0 to 0.0100%, Pb: 0 to 0.0100%, Sb: 0 to 0.0100%, and with the balance being Fe and impurities, there is a possibility that excellent general corrosion resistance and excellent pitting resistance can be obtained in a supercritical corrosive environment.

However, even in the case of duplex stainless steel materials in which the contents of the respective elements in the chemical composition were within the aforementioned range, in some cases the general corrosion resistance in a supercritical corrosive environment was low. Therefore, the present inventors conducted further studies regarding means for improving the general corrosion resistance in a supercritical corrosive environment.

Here, the present inventors focused on the action of each element in the chemical composition. It is already known that Cr, Mo, W and N improve general corrosion resistance in an ordinary corrosive environment containing chloride, such as sea water. Therefore, the present inventors considered that these elements will also improve general corrosion resistance in a supercritical corrosive environment.

The present inventors also conducted studies with regard to identifying elements other than Cr, Mo, W and N which improve general corrosion resistance in a supercritical corrosive environment. As a result, it has been revealed for the first time by the studies of the present inventors that in a supercritical corrosive environment, not only Cr, Mo, W, and N, but also Ni, Cu, Co and Sn improve general corrosion resistance in a supercritical corrosive environment.

Therefore, the present inventors conducted further studies regarding the relation between the contents of Cr, Mo, W, N, Ni, Cu, Co and Sn in a duplex stainless steel material and the general corrosion resistance in a supercritical corrosive environment. As a result, it has been revealed that in a duplex stainless steel material in which the content of each element in the chemical composition is within the range of the present embodiment, if, in addition, Fn defined by Formula (1) is 57.0 or more, excellent general corrosion resistance will be obtained in a supercritical corrosive environment.

$$Fn = Cr+3.3(Mo+0.5W)+16N+2Ni+Cu+2Co+10Sn...(1)$$

Where a content in mass% of a corresponding element is substituted for each symbol of an element in Formula (1).

FIG. 1 is a view illustrating the relation between Fn in duplex stainless steel materials in which the content of each element in the chemical composition is within the range of the present embodiment, and a corrosion rate (mm/yr) which is an index of general corrosion resistance. FIG. 1 was created based on data obtained in Examples to be described later. Referring to FIG. 1, the corrosion rate when Fn is less than 57.0 is faster than 0.100 mm/yr. On the other hand, the corrosion rate when Fn is 57.0 or more is noticeably slow compared to the corrosion rate when Fn is less than 57.0. Therefore, in a duplex stainless steel material in which the content of each element in the chemical composition is within the range of the present embodiment, the general corrosion resistance in a supercritical corrosive environment is noticeably improved by making Fn 57.0 or more.

However, even in the case of duplex stainless steel materials in which the content of each element in the chemical composition was within the range of the present embodiment and Fn was 57.0 or more, although excellent general corrosion resistance was obtained in a supercritical corrosive environment, in some cases the pitting resistance was low. Therefore, the present inventors conducted additional studies with regard to achieving both excellent general corrosion resistance and excellent pitting resistance in a supercritical corrosive environment.

Here, the present inventors did not adopt an approach from the viewpoint of the chemical composition, and instead took a different approach and focused on inclusions in the duplex stainless steel material.

In general, in the case of a low alloy steel material in which the Cr content is 2.00% or less, it is known that in an ordinary corrosive environment, inclusions (oxides, sulfides, nitrides and the like) in the steel material become the starting points of cracks, and in some cases pitting occurs. In contrast, in a high alloy steel material having a Cr content of 10.00% or more, the Cr content is high. Consequently, in comparison to a low alloy steel material, a strong passivation film is formed on the surface of the high alloy steel material. Therefore, it has conventionally been considered that it is difficult for pitting with respect to which inclusions act as a starting point to occur in a high alloy steel material.

However, it has been revealed that in a supercritical corrosive environment, which is different from an ordinary corrosive environment, pitting for which inclusions act as a starting point occurs even in a high alloy steel material due to the mechanism described hereunder.

In a supercritical corrosive environment, SOx gas and $O_2$ gas are contained in a high-temperature, high-pressure supercritical $CO_2$ gas. In a case where Mn sulfides are present in the outer layer of the duplex stainless steel material, the inclusions in the outer layer of the duplex stainless steel material dissolve due to the SOx gas and $O_2$ gas dissolving into water in the supercritical corrosive environment. When the inclusions dissolve, hollows are formed on the surface. A hollow formed when a coarse inclusion dissolves is liable to become a starting point of pitting in a supercritical corrosive environment.

As the result of further studies conducted by the present inventors it has been revealed that, in a supercritical corrosive environment, it is not the case that all coarse inclusions (oxides, sulfides, nitrides and the like) present in an outer layer of a duplex stainless steel material become starting points of pitting, and instead pitting occurs as a result of Mn sulfides dissolving and hollows thereby being formed in the steel material surface.

As described above, the present inventors ascertained that, in a duplex stainless steel material in a supercritical corrosive environment, in some cases pitting occurs due to a mechanism that is different from the case of a low alloy steel material in an ordinary corrosive environment.

Based on the findings described above, the present inventors considered that, in a duplex stainless steel material in which the content of each element in the chemical composition is within the range of the present embodiment, by suppressing the formation of coarse Mn sulfides, the occurrence of hollows on the surface that are attributable to dissolution of Mn sulfides can be suppressed, and the pitting resistance in a supercritical corrosive environment can be improved.

Therefore, the present inventors considered that if the aforementioned chemical composition further contains Ca in an amount of 0.0010 to 0.0100% in mass%, formation of coarse Mn sulfides can be suppressed. That is, the present inventors considered that if a duplex stainless steel material has a chemical composition containing, in mass%, C: 0.050% or less, Si: 1.00% or less, Mn: 0.80% or less, P: 0.050% or less, S: 0.0050% or less, Cr: 25.00 to 27.00%, Cu: 0.10 to 2.50%, Ni: 5.00 to 8.50%, Mo: 2.00 to 4.50%, W: 1.50 to 3.00%, N: 0.150 to 0.350%, Co: 0.10 to 1.00%, Sn: 0.001 to 0.050%, sol. Al: 0.050% or less, V: 0.01 to 0.50%, Ti: 0.001 to 0.050%, Ca: 0.0010 to 0.0100%, B: 0.0020 to 0.0050%, O: 0.0100% or less, Mg: 0 to 0.0100%, rare earth metal: 0 to 0.0100%, Zr: 0 to 0.0100%, Nb: 0 to 0.500%, As: 0 to 0.0500%, Zn: 0 to 0.0100%, Pb: 0 to 0.0100%, Sb: 0 to 0.0100%, and with the balance being Fe and impurities, the formation of coarse Mn sulfides can be suppressed. Specifically, by containing Ca, Ca combines with S to form Ca sulfides. By forming Ca sulfides, the amount of S that combines with Mn decreases. Therefore, formation of coarse Mn sulfides is suppressed.

Therefore, the present inventors produced duplex stainless steel materials having the aforementioned chemical composition, and investigated the pitting resistance thereof in a supercritical corrosive environment. As a result, it has been revealed that although formation of coarse Mn sulfides is suppressed, there were still cases in which excellent pitting resistance could not be obtained. Hence, the present inventors conducted further investigations and studies regarding the reason why pitting resistance is not sufficiently obtained. As a result, the present inventors ascertained that when a duplex stainless steel material has the aforementioned Ca content, in some cases excellent pitting resistance cannot be obtained in a supercritical corrosive environment due to the following new mechanism.

In a case where the chemical composition of a steel material has the aforementioned Ca content, Ca sulfides are formed and the formation of coarse Mn sulfides is suppressed. However, in a supercritical corrosive environment, the Ca sulfides themselves are also liable to dissolve similarly to Mn sulfides. Therefore, if coarse Ca sulfides are present in the outer layer of a steel material, similarly to Mn sulfides, the Ca sulfides dissolve and hollows are formed in the steel material surface. In some cases pitting occurs in a supercritical corrosive environment due to such hollows on the surface that are caused by the Ca sulfides.

Based on the findings described above, the present inventors considered that, in a duplex stainless steel material in which the content of each element in the chemical composition is within the range of the present embodiment, if the formation of coarse Ca sulfides can also be suppressed, and not just the formation of coarse Mn sulfides, it is possible to achieve both excellent general corrosion resistance and excellent pitting resistance even in a supercritical corrosive environment.

Hence, the present inventors conducted further studies to determine to what extent the total number per unit area of coarse Mn sulfides and coarse Ca sulfides needs to be suppressed in order to obtain excellent general corrosion resistance and excellent pitting resistance in a supercritical corrosive environment. As a result, it has been revealed that, among inclusions in the duplex stainless steel material, if the total of Mn sulfides having an equivalent circular diameter of 1.0 $\mu$m or more and Ca sulfides having an equivalent circular diameter of 2.0 $\mu$m or more is 0.50 /mm$^2$ or less, excellent general corrosion resistance and excellent pitting resistance can both be achieved even in a supercritical corrosive environment in which SOx gas and $O_2$ gas are contained in a supercritical $CO_2$ gas.

The duplex stainless steel material of the present embodiment was completed based on the technical idea described above, and is as follows.

[1] A duplex stainless steel material consisting of, in mass%,

C: 0.050% or less,
Si: 1.00% or less,
Mn: 0.80% or less,
P: 0.050% or less,
S: 0.0050% or less,
Cr: 25.00 to 27.00%,
Cu: 0.10 to 2.50%,
Ni: 5.00 to 8.50%,
Mo: 2.00 to 4.50%,
W: 1.50 to 3.00%,
N: 0.150 to 0.350%,
Co: 0.10 to 1.00%,
Sn: 0.001 to 0.050%,
sol. Al: 0.050% or less,
V: 0.01 to 0.50%,
Ti: 0.001 to 0.050%,
Ca: 0.0010 to 0.0100%,
B: 0.0020 to 0.0050%,
O: 0.0100% or less,
Mg: 0 to 0.0100%,
rare earth metal: 0 to 0.0100%,
Zr: 0 to 0.0100%,
Nb: 0 to 0.500%,
As: 0 to 0.0500%,
Zn: 0 to 0.0100%,
Pb: 0 to 0.0100%,
Sb: 0 to 0.0100%, and
with the balance being Fe and impurities,
wherein:

on a precondition that a content of each of the elements is within a range described above, Fn defined by Formula (1) is 57.0 or more; and
in the duplex stainless steel material,
a total number per 1 $mm^2$ of Mn sulfides having a Mn content of 10% or more in mass%, an S content of 10% or more in mass%, and an equivalent circular diameter of 1.0 $\mu m$ or more, and Ca sulfides having a Ca content of 20% or more in mass%, an S content of 10% or more in mass%, a Mn content of less than 10% in mass%, and an equivalent circular diameter of 2.0 $\mu m$ or more is 0.50 /$mm^2$ or less;

$$Fn = Cr+3.3(Mo+0.5W)+16N+2Ni+Cu+2Co+10Sn...(1)$$

where, a content in mass% of a corresponding element is substituted for each symbol of an element in Formula (1).

[2] The duplex stainless steel material according to [1], containing one or more types of element selected from the group consisting of:

Mg: 0.0001 to 0.0100%,
rare earth metal: 0.0001 to 0.0100%,
Zr: 0.0001 to 0.0100%,
Nb: 0.001 to 0.500%,

As: 0.0001 to 0.0500%,
Zn: 0.0001 to 0.0100%,
Pb: 0.0001 to 0.0100%, and
Sb: 0.0001 to 0.0100%.

[3] The duplex stainless steel material according to [1] or [2], wherein:
the duplex stainless steel material is a steel pipe.

The duplex stainless steel material of the present embodiment will be described in detail below. The sign "%" following each element means mass percent unless otherwise noted.

[Characteristics of duplex stainless steel material of present embodiment]

The duplex stainless steel material of the present embodiment has the following characteristics.

(Characteristic 1)

The content of each element in the chemical composition is within the range of the present embodiment.

(Characteristic 2)

On the precondition of satisfying characteristic 1, Fn defined by Formula (1) is 57.0 or more.

$$Fn = Cr + 3.3(Mo + 0.5W) + 16N + 2Ni + Cu + 2Co + 10Sn...(1)$$

Where, a content in mass% of a corresponding element is substituted for each symbol of an element in Formula (1).

(Characteristic 3)

A total number per 1 $mm^2$ of Mn sulfides having an equivalent circular diameter of 1.0 $\mu$m or more and Ca sulfides having an equivalent circular diameter of 2.0 $\mu$m or more is 0.50 /$mm^2$ or less.
Hereunder, the respective characteristics 1 to 3 are described.

[(Characteristic 1) Regarding chemical composition]

The chemical composition of the duplex stainless steel material of the present embodiment contains the following elements.

C: 0.050% or less

Carbon (C) is unavoidably contained. That is, the C content is more than 0%. C forms Cr carbides at grain boundaries and increases corrosion susceptibility at the grain boundaries. Therefore, if the C content is too high, the general corrosion resistance and pitting resistance of the steel material will decrease even if the contents of other elements are within the range of the present embodiment.
Accordingly, the C content is 0.050% or less.
The C content is preferably as low as possible. However, extremely reducing the C content will significantly increase the production cost. Therefore, when industrial production is taken into consideration, a lower limit of the C content is preferably 0.001%, and more preferably 0.005%.
An upper limit of the C content is preferably 0.048%, more preferably 0.046%, further preferably 0.044%, and further preferably 0.042%.

Si: 1.00% or less

Silicon (Si) is unavoidably contained. That is, the Si content is more than 0%. Si deoxidizes steel. However, if the Si content is too high, the toughness and hot workability of the steel material will decrease even if the contents of the other elements are within the range of the present embodiment.

Accordingly, the Si content is 1.00% or less.

A lower limit of the Si content is preferably 0.15%, more preferably 0.20%, and further preferably 0.25%.

An upper limit of the Si content is preferably 0.80%, more preferably 0.60%, and further preferably 0.50%.

Mn: 0.80% or less

Manganese (Mn) is unavoidably contained. That is, the Mn content is more than 0%. Mn increases hardenability of the steel material, thereby increasing the strength of the steel material. However, if the Mn content is too high, Mn will form a large number of coarse Mn sulfides. In a supercritical corrosive environment, coarse Mn sulfides that are present in the vicinity of the surface of the steel material will dissolve. As a result, hollows will be formed on the steel material surface. The hollows will act as starting points of pitting, and pitting will occur in the supercritical corrosive environment. If the Mn content is more than 0.80%, the aforementioned hollows will form even if the contents of the other elements are within the range of the present embodiment, and the pitting resistance in a supercritical corrosive environment will decrease.

Accordingly, the Mn content is 0.80% or less.

A lower limit of the Mn content is preferably 0.01%, more preferably 0.05%, further preferably 0.10%, further preferably 0.20%, and further preferably 0.25%, further preferably 0.30%, and further preferably 0.35%.

An upper limit of the Mn content is preferably 0.78%, more preferably 0.75%, further preferably 0.70%, and further preferably 0.65%.

P: 0.050% or less

Phosphorus (P) is an impurity. That is, the P content is more than 0%. P segregates at grain boundaries, thereby lowering the toughness of the steel material.

Accordingly, the P content is 0.050% or less.

The P content is preferably as low as possible. However, extremely reducing the P content will significantly increase the production cost. Therefore, when industrial production is taken into consideration, a lower limit of the P content is preferably 0.001%, and more preferably 0.003%.

An upper limit of the P content is preferably 0.045%, more preferably 0.040%, further preferably 0.035%, and further preferably 0.030%.

S: 0.0050% or less

Sulfur (S) is an impurity. That is, the S content is more than 0%. S segregates at grain boundaries, thereby lowering the toughness and hot workability of the steel material.

Accordingly, the S content is 0.0050% or less.

The S content is preferably as low as possible. However, extremely reducing the S content will significantly increase the production cost. Therefore, when industrial production is taken into consideration, a lower limit of the S content is preferably 0.0001%, and more preferably 0.0002%.

An upper limit of the S content is preferably 0.0040%, more preferably 0.0030%, further preferably 0.0020%, further preferably 0.0015%, and further preferably 0.0010%.

Cr: 25.00 to 27.00%

Chromium (Cr) increases the general corrosion resistance and pitting resistance of the steel material in a supercritical corrosive environment. Specifically, Cr forms a passivation film as an oxide on the surface of the steel material. As a result, the general corrosion resistance and pitting resistance of the steel material increase. If the Cr content is less than 25.00%, the aforementioned effect cannot be sufficiently obtained even if the contents of the other elements are within the range of the present embodiment.

On the other hand, if the Cr content is more than 27.00%, the volume ratio of ferrite will be too high even if the contents of the other elements are within the range of the present embodiment. In this case, the toughness of the steel material will decrease.

Accordingly, the Cr content is 25.00 to 27.00%.

A lower limit of the Cr content is preferably 25.05%, more preferably 25.10%, further preferably 25.50%, and further preferably 26.00%.

An upper limit of the Cr content is preferably 26.80%, more preferably 26.60%, further preferably 26.40%, and further preferably 26.20%.

Cu: 0.10 to 2.50%

Copper (Cu) increases the general corrosion resistance and pitting resistance of the steel material in a supercritical corrosive environment. If the Cu content is less than 0.10%, the aforementioned effect cannot be sufficiently obtained even if the contents of the other elements are within the range of the present embodiment.

On the other hand, if the Cu content is more than 2.50%, the hot workability of the steel material will decrease even if the contents of the other elements are within the range of the present embodiment.

Accordingly, the Cu content is 0.10 to 2.50%.

A lower limit of the Cu content is preferably 0.15%, more preferably 0.20%, further preferably 0.30%, further preferably 0.40%, and further preferably 1.00%.

An upper limit of the Cu content is preferably 2.45%, more preferably 2.30%, further preferably 2.10%, further preferably 2.00%, and further preferably 1.90%.

Ni: 5.00 to 8.50%

Nickel (Ni) stabilizes austenite in the steel material. Ni also increases the general corrosion resistance and pitting resistance of the steel material in a supercritical corrosive environment. If the Ni content is less than 5.00%, the aforementioned effects cannot be sufficiently obtained even if the contents of the other elements are within the range of the present embodiment.

On the other hand, if the Ni content is more than 8.50%, the volume ratio of austenite will become too high even if the contents of the other elements are within the range of the present embodiment. In this case, the strength of the steel material will decrease.

Accordingly, the Ni content is 5.00 to 8.50%.

A lower limit of the Ni content is preferably 5.10%, more preferably 5.20%, further preferably 5.30%, further preferably 5.40%, and further preferably 5.50%.

An upper limit of the Ni content is preferably 8.30%, more preferably 8.00%, further preferably 7.70%, and further preferably 7.60%.

Mo: 2.00 to 4.50%

Molybdenum (Mo) increases the general corrosion resistance and pitting resistance of the steel material in a supercritical corrosive environment. If the Mo content is less than 2.00%, the aforementioned effect cannot be sufficiently obtained even if the contents of the other elements are within the range of the present embodiment.

On the other hand, if the Mo content is more than 4.50%, the hot workability of the steel material will decrease even if the contents of the other elements are within the range of the present embodiment.

Accordingly, the Mo content is 2.00 to 4.50%.

A lower limit of the Mo content is preferably 2.10%, more preferably 2.20%, further preferably 2.30%, further preferably 2.40%, and further preferably 2.50%.

An upper limit of the Mo content is preferably 4.40%, more preferably 4.30%, further preferably 4.20%, further preferably 4.10%, and further preferably 4.00%.

W: 1.50 to 3.00%

Tungsten (W) increases the general corrosion resistance and pitting resistance of the steel material in a supercritical corrosive environment. If the W content is 1.50% or more, excellent general corrosion resistance and pitting resistance in a supercritical corrosive environment will be enhanced.

On the other hand, if the W content is more than 3.00%, the strength of the steel material will become too high even if the contents of the other elements are within the range of the present embodiment. In this case, the toughness of the steel material will decrease.

Accordingly, the W content is 1.50 to 3.00%.

A lower limit of the W content is preferably 1.55%, more preferably 1.60%, further preferably 1.65%, further preferably 1.70%, further preferably 1.75%, and further preferably 1.80%.

An upper limit of the W content is preferably 2.95%, more preferably 2.90%, further preferably 2.85%, and further preferably 2.75%.

N: 0.150 to 0.350%

Nitrogen (N) stabilizes austenite in the steel material. N also increases the general corrosion resistance and pitting resistance of the steel material in a supercritical corrosive environment. If the N content is less than 0.150%, the aforementioned effects cannot be sufficiently obtained even if the contents of the other elements are within the range of the present embodiment.

On the other hand, if the N content is more than 0.350%, the toughness and hot workability of the steel material will decrease even if the contents of the other elements are within the range of the present embodiment.

Accordingly, the N content is 0.150 to 0.350%.

A lower limit of the N content is preferably 0.180%, more preferably 0.200%, further preferably 0.220%, further preferably 0.240%, and further preferably 0.260%.

An upper limit of the N content is preferably 0.340%, more preferably 0.330%, further preferably 0.320%, further preferably 0.310%, and further preferably 0.300%.

Co: 0.10 to 1.00%

Cobalt (Co) increases the general corrosion resistance and pitting resistance of the steel material in a supercritical corrosive environment. In particular, Co increases the pitting resistance of the steel material. Co also increases the hardenability of the steel material, thereby increasing the strength of the steel material. If the Co content is less than 0.10%, the aforementioned effects cannot be sufficiently obtained.

On the other hand, if the Co content is more than 1.00%, the production cost will increase extremely even if the contents of the other elements are within the range of the present embodiment.

Accordingly, the Co content is 0.10 to 1.00%.

A lower limit of the Co content is preferably 0.15%, more preferably 0.20%, and further preferably 0.25%.

An upper limit of the Co content is preferably 0.90%, more preferably 0.80%, further preferably 0.70%, further preferably 0.60%, and further preferably 0.50%.

Sn: 0.001 to 0.050%

Tin (Sn) increases the general corrosion resistance and pitting resistance of the steel material in a supercritical corrosive environment. In particular, Sn increases the pitting resistance of the steel material. If the Sn content is less than 0.001%, the aforementioned effect cannot be sufficiently obtained even if the contents of the other elements are within the range of the present embodiment.

On the other hand, if the Sn content is more than 0.050%, the production cost will increase extremely even if the contents of the other elements are within the range of the present embodiment.

Accordingly, the Sn content is 0.001 to 0.050%.

A lower limit of the Sn content is preferably 0.002%, more preferably 0.003%, and further preferably 0.004%.

An upper limit of the Sn content is preferably 0.040%, more preferably 0.030%, further preferably 0.020%, further preferably 0.015%, and further preferably 0.010%.

sol. Al: 0.050% or less

Aluminum (Al) is unavoidably contained. That is, the sol. Al content is more than 0%.

Al deoxidizes steel. However, if the sol. Al content is more than 0.050%, coarse oxides will form even if the contents of the other elements are within the range of the present embodiment. Such coarse oxides will decrease the toughness of the steel material.

Accordingly, the sol. Al content is 0.050% or less.

A lower limit of the sol. Al content is preferably 0.001%, more preferably 0.005%, and further preferably 0.010%.

An upper limit of the sol. Al content is preferably 0.040%, and more preferably 0.030%. Note that, the term "sol. Al content" means the content of acid-soluble Al.

V: 0.01 to 0.50%

Vanadium (V) forms carbo-nitrides, and thereby increases the strength of the steel material. If the V content is less than 0.01%, the aforementioned effect cannot be sufficiently obtained even if the contents of the other elements are within the range of the present embodiment.

On the other hand, if the V content is more than 0.50%, the strength of the steel material will become too high even if the contents of the other elements are within the range of the present embodiment. In this case, the toughness of the steel material will decrease.

Accordingly, the V content is 0.01 to 0.50%.

A lower limit of the V content is preferably 0.02%, more preferably 0.03%, and further preferably 0.04%.

An upper limit of the V content is preferably 0.40%, more preferably 0.30%, further preferably 0.20%, and further preferably 0.10%.

Ti: 0.001 to 0.050%

Titanium (Ti) forms carbo-nitrides, and thereby increases the strength of the steel material. If the Ti content is less than 0.001%, the aforementioned effect cannot be sufficiently obtained even if the contents of the other elements are within the range of the present embodiment.

On the other hand, if the Ti content is more than 0.050%, the strength of the steel material will become too high even if the contents of the other elements are within the range of the present embodiment. In this case, the toughness of the steel material will decrease.

Accordingly, the Ti content is 0.001 to 0.050%.

A lower limit of the Ti content is preferably 0.002%, more preferably 0.003%, and further preferably 0.004%.

An upper limit of the Ti content is preferably 0.040%, more preferably 0.030%, further preferably 0.020%, further preferably 0.010%, and further preferably 0.007%.

Ca: 0.0010 to 0.0100%

Calcium (Ca) combines with S in the steel material to form Ca sulfides, and thereby suppresses formation of Mn sulfides.

If Mn sulfides having an equivalent circular diameter of 1.0 $\mu$m or more are present in the outer layer of the steel material, the Mn sulfides in the outer layer will dissolve in a supercritical corrosive environment. Hollows will form on the steel material surface due to dissolution of the Mn sulfides. The hollows formed in the steel material surface are liable to become starting points of pitting in a supercritical corrosive environment.

Ca suppresses the formation of Mn sulfides, and lowers the number density (/mm$^2$) of Mn sulfides having an equivalent circular diameter of 1.0 $\mu$m or more. As a result, the pitting resistance of the steel material in a supercritical corrosive environment increases.

If the Ca content is less than 0.0010%, the aforementioned effect cannot be sufficiently obtained even if the contents of the other elements are within the range of the present embodiment.

On the other hand, if the Ca content is more than 0.0100%, even if the contents of the other elements are within the range of the present embodiment, Ca sulfides having an equivalent circular diameter of 2.0 $\mu$m or more will be excessively formed. If Ca sulfides having an equivalent circular diameter of 2.0 $\mu$m or more are present in the outer layer of the steel material, the Ca sulfides having an equivalent circular diameter of 2.0 $\mu$m or more will dissolve in a supercritical corrosive environment, similarly to the aforementioned coarse Mn sulfides. Consequently, hollows will be formed on the steel material surface. The pitting resistance of the steel material will decrease due to such hollows.

Accordingly, the Ca content is 0.0010 to 0.0100%.

A lower limit of the Ca content is preferably 0.0013%, more preferably 0.0016%, and further preferably 0.0019%.

An upper limit of the Ca content is preferably 0.0090%, more preferably 0.0080%, further preferably 0.0070%, further preferably 0.0060%, further preferably 0.0050%, and further preferably 0.0040%.

B: 0.0020 to 0.0050%

Boron (B) suppresses segregation of S in the steel material at grain boundaries, and thereby improves the hot workability of the steel material. If the B content is less than 0.0020%, the aforementioned effect cannot be sufficiently obtained even if the contents of the other elements are within the range of the present embodiment.

On the other hand, if the B content is more than 0.0050%, boron nitride (BN) will be formed even if the contents of the other elements are within the range of the present embodiment. The boron nitride will cause the toughness of the steel material to decrease.

Accordingly, the B content is 0.0020 to 0.0050%.

A lower limit of the B content is preferably 0.0022%, more preferably 0.0024%, and further preferably 0.0026%.

An upper limit of the B content is preferably 0.0046%, more preferably 0.0044%, further preferably 0.0042%, further preferably 0.0040%, further preferably 0.0038%, further preferably 0.0036%, and further preferably 0.0034%.

O: 0.0100% or less

Oxygen (O) is an unavoidably contained impurity. That is, the O content is more than 0%.

O forms oxides, thereby causing the toughness of the steel material to decrease. If the O content is more than 0.0100%, the toughness of the steel material will noticeably decrease even if the contents of the other elements are within the range of the present embodiment.

Accordingly, the O content is 0.0100% or less.

The O content is preferably as low as possible. However, excessively lowering the O content will result in an increase in the production cost. Therefore, taking industrial production into consideration, a lower limit of the O content is preferably 0.0001%, and more preferably 0.0002%.

An upper limit of the O content is preferably 0.0080%, more preferably 0.0060%, further preferably 0.0040%, and further preferably 0.0030%.

The balance of the chemical composition of the duplex stainless steel material according to the present embodiment is Fe and impurities. Here, impurities in the chemical composition means elements which are mixed in from ore and scrap as the raw material or from the production environment or the like when industrially producing the duplex stainless steel material, and which are not intentionally contained but are permitted within a range not adversely affecting the duplex stainless steel material of the present embodiment.

[Regarding optional elements]

The chemical composition of the duplex stainless steel material of the present embodiment may further contain, in lieu of a part of Fe, one or more types of element selected from the group consisting of:

Mg: 0 to 0.0100%,
rare earth metal: 0 to 0.0100%,
Zr: 0 to 0.0100%,
Nb: 0 to 0.500%,
As: 0 to 0.0500%,
Zn: 0 to 0.0100%,
Pb: 0 to 0.0100%, and
Sb: 0 to 0.0100%.

Each optional element is described below.

[First group: Mg and rare earth metal (REM)]

The duplex stainless steel material of the present embodiment may further contain one or more types of element selected from the group consisting of Mg and rare earth metal in lieu of a part of Fe. Each of these elements is an optional element, and improves the hot workability of the steel material. Mg and rare earth metal are described hereunder.

Mg: 0 to 0.0100%

Magnesium (Mg) is an optional element, and does not have to be contained. That is, the Mg content may be 0%.

When contained, that is, when the Mg content is more than 0%, Mg controls the morphology of inclusions, thereby improving the hot workability of the steel material. If even a small amount of Mg is contained, the aforementioned effect can be obtained to some extent.

However, if the Mg content is more than 0.0100%, oxides in the steel material will coarsen even if the contents of the other elements are within the range of the present embodiment. In this case, the toughness of the steel material will decrease.

Accordingly, the Mg content is 0 to 0.0100%, and when contained, is 0.0100% or less.

A lower limit of the Mg content is preferably 0.0001%, more preferably 0.0003%, further preferably 0.0005%, further preferably 0.0008%, and further preferably 0.0010%.

An upper limit of the Mg content is preferably 0.0090%, more preferably 0.0080%, further preferably 0.0070%, and further preferably 0.0060%.

Rare earth metal: 0 to 0.0100%

Rare earth metal (REM) is an optional element, and does not have to be contained. That is, the REM content may be 0%.

When contained, that is, when the REM content is more than 0%, REM controls the morphology of inclusions, thereby improving the hot workability of the steel material. If even a small amount of REM is contained, the aforementioned effect can be obtained to some extent.

However, if the REM content is more than 0.0100%, oxides in the steel material will coarsen even if the contents of the other elements are within the range of the present embodiment. In this case, the toughness of the steel material will decrease.

Accordingly, the REM content is 0 to 0.0100%, and when contained, is 0.0100% or less.

A lower limit of the REM content is preferably 0.0001%, more preferably 0.0003%, and further preferably 0.0006%.

An upper limit of the REM content is preferably 0.0090%, more preferably 0.0080%, further preferably 0.0070%, further preferably 0.0060%, further preferably 0.0050%, and further preferably 0.0040%.

In the present description the term "REM" means one or more types of element selected from the group consisting of scandium (Sc) which is the element with atomic number 21, yttrium (Y) which is the element with atomic number 39, and the elements from lanthanum (La) with atomic number 57 to lutetium (Lu) with atomic number 71 that are lanthanoids. In the present description the term "REM content" refers to the total content of these elements.

[Second group: Zr and Nb]

The duplex stainless steel material of the present embodiment may further contain one or more types of element selected from the group consisting of Zr and Nb in lieu of a part of Fe. Each of these elements is an optional element, and increases the strength of the steel material. Zr and Nb are described hereunder.

Zr: 0 to 0.0100%

Zirconium (Zr) is an optional element, and does not have to be contained. That is, Zr content may be 0%.

When contained, that is, when the Zr content is more than 0%, Zr forms carbo-nitrides, and thereby increases the strength of the steel material. If even a small amount of Zr is contained, the aforementioned effect can be obtained to some extent.

However, if the Zr content is more than 0.0100%, the strength of the steel material will become too high even if the contents of the other elements are within the range of the present embodiment. In this case, the toughness of the steel material will decrease.

Accordingly, the Zr content is 0 to 0.0100%, and when contained, is 0.0100% or less.

A lower limit of the Zr content is preferably 0.0001%, more preferably 0.0005%, and further preferably 0.0010%.

An upper limit of the Zr content is preferably 0.0080%, more preferably 0.0060%, further preferably 0.0040%, and further preferably 0.0020%.

Nb: 0 to 0.500%

Niobium (Nb) is an optional element, and does not have to be contained. That is, the Nb content may be 0%.

When contained, that is, when the Nb content is more than 0%, Nb forms carbo-nitrides, and thereby increases the strength of the steel material. If even a small amount of Nb is contained, the aforementioned effect can be obtained to some extent.

However, if the Nb content is more than 0.500%, the strength of the steel material will become too high even if the contents of the other elements are within the range of the present embodiment. In this case, the toughness of the steel material will decrease.

Accordingly, the Nb content is 0 to 0.500%, and when contained, is 0.500% or less.

A lower limit of the Nb content is preferably 0.001%, more preferably 0.003%, further preferably 0.005%, further preferably 0.008%, and further preferably 0.010%.

An upper limit of the Nb content is preferably 0.400%, more preferably 0.300%, further preferably 0.200%, and further preferably 0.150%.

[Third group: As, Zn, Pb and Sb]

The duplex stainless steel material of the present embodiment may further contain one or more types of element selected from the group consisting of As, Zn, Pb and Sb in lieu of a part of Fe. Each of these elements is an optional element, and increases the general corrosion resistance of the steel material. As, Zn, Pb and Sb are described hereunder.

As: 0 to 0.0500%

Arsenic (As) is an optional element, and does not have to be contained. That is, the As content may be 0%.

When contained, that is, when the As content is more than 0%, As increases the general corrosion resistance of the steel material in a supercritical corrosive environment. If even a small amount of As is contained, the aforementioned effect can be obtained to some extent.

However, if the As content is more than 0.0500%, As will segregate at grain boundaries even if the contents of the other elements are within the range of the present embodiment. In this case, the general corrosion resistance and pitting resistance of the steel material in a supercritical corrosive environment will decrease.

Accordingly, the As content is 0 to 0.0500%, and when contained, is 0.0500% or less.

A lower limit of the As content is preferably 0.0001%, and more preferably 0.0002%.

An upper limit of the As content is preferably 0.0300%, more preferably 0.0100%, further preferably 0.0050%, further preferably 0.0020%, and further preferably 0.0010%.

Zn: 0 to 0.0100%

Zinc (Zn) is an optional element, and does not have to be contained. That is, the Zn content may be 0%.

When contained, that is, when the Zn content is more than 0%, Zn increases the general corrosion resistance of the steel material in a supercritical corrosive environment. If even a small amount of Zn is contained, the aforementioned effect can be obtained to some extent.

However, if the Zn content is more than 0.0100%, the general corrosion resistance and pitting resistance of the steel material in a supercritical corrosive environment will decrease even if the contents of the other elements are within the range of the present embodiment.

Accordingly, the Zn content is 0 to 0.0100%, and when contained, is 0.0100% or less.

A lower limit of the Zn content is preferably 0.0001%, and more preferably 0.0002%.

An upper limit of the Zn content is preferably 0.0080%, more preferably 0.0060%, further preferably 0.0040%, and further preferably 0.0020%.

Pb: 0 to 0.0100%

Lead (Pb) is an optional element, and does not have to be contained. That is, the Pb content may be 0%.

When contained, that is, when the Pb content is more than 0%, Pb increases the general corrosion resistance of the steel material in a supercritical corrosive environment. If even a small amount of Pb is contained, the aforementioned effect can be obtained to some extent.

However, if the Pb content is more than 0.0100%, even if the contents of the other elements are within the range of the present embodiment, there will be a large number of flaws on the steel material surface after hot working.

Accordingly, the Pb content is 0 to 0.0100%, and when contained, is 0.0100% or less.

A lower limit of the Pb content is preferably 0.0001%, and more preferably 0.0002%.

An upper limit of the Pb content is preferably 0.0080%, more preferably 0.0060%, further preferably 0.0040%, and further preferably 0.0020%.

Sb: 0 to 0.0100%

Antimony (Sb) is an optional element, and does not have to be contained. That is, the Sb content may be 0%.

When contained, that is, when the Sb content is more than 0%, Sb increases the general corrosion resistance of the steel material in a supercritical corrosive environment. If even a small amount of Sb is contained, the aforementioned effect can be obtained to some extent.

However, if the Sb content is too high, the production cost will increase extremely even if the contents of the other elements are within the range of the present embodiment.

Accordingly, the Sb content is 0 to 0.0100%, and when contained, is 0.0100% or less.

A lower limit of the Sb content is preferably 0.0001%, more preferably 0.0005%, further preferably 0.0010%, further preferably 0.0015%, and further preferably 0.0020%.

An upper limit of the Sb content is preferably 0.0090%, more preferably 0.0080%, further preferably 0.0070%, further preferably 0.0060%, and further preferably 0.0050%.

[(Characteristic 2) Regarding Fn]

On the precondition that the content of each element in the chemical composition is within the range of the present embodiment, that is, on the precondition that characteristic 1 is satisfied, the duplex stainless steel material of the present embodiment satisfies the following characteristic 2.

(Characteristic 2)

Fn defined by Formula (1) is 57.0 or more.

$$Fn = Cr+3.3(Mo+0.5W)+16N+2Ni+Cu+2Co+10Sn...(1)$$

Where, a content in mass% of a corresponding element is substituted for each symbol of an element in Formula (1).

Fn is an index of the general corrosion resistance of the duplex stainless steel material in a supercritical corrosive environment. As mentioned above, in a supercritical corrosive environment in which SOx gas and $O_2$ gas are contained in a supercritical $CO_2$ gas, among the elements in the duplex stainless steel material satisfying characteristic 1, not only Cr, Mo, W and N, but also Ni, Cu, Co and Sn contribute to improvement of the general corrosion resistance.

Fn is a parametric formula which is set by taking into account the degree to which each element in the duplex stainless steel material that satisfies characteristic 1 contributes to the general corrosion resistance in a supercritical corrosive environment. Referring to FIG. 1, when Fn is less than 57.0, the corrosion rate that is an index of the general corrosion resistance in a supercritical corrosive environment is fast. That is, when Fn is less than 57.0, even if characteristic 1 and characteristic 3 are satisfied, the general corrosion resistance in a supercritical corrosive environment is low. On the other hand, when Fn is 57.0 or more, the corrosion rate becomes noticeably slow. That is, when Fn is 57.0 or more, the general corrosion resistance in a supercritical corrosive environment markedly improves. Accordingly, Fn is to be 57.0 or more.

A lower limit of Fn is preferably 57.5, more preferably 58.0, further preferably 58.5, and further preferably 59.0.

[(Characteristic 3) Regarding total number density ND]

In addition to satisfying characteristic 1 and characteristic 2, the duplex stainless steel material of the present embodiment also satisfies the following characteristic 3.

(Characteristic 3)

The total number per 1 $mm^2$ of Mn sulfides having an equivalent circular diameter of 1.0 $\mu m$ or more and Ca sulfides having an equivalent circular diameter of 2.0 $\mu m$ or more is 0.50 /$mm^2$ or less.

Here, among the inclusions contained in the duplex stainless steel material, a Mn sulfide and a Ca sulfide are defined as follows.

Mn sulfide: when taking the mass percent of an inclusion as 100%, a Mn sulfide is an inclusion having, in mass%, a Mn content of 10% or more and an S content of 10% or more.

Ca sulfide: when taking the mass percent of an inclusion as 100%, a Ca sulfide is an inclusion having, in mass%, a Ca content of 20% or more, an S content of 10% or more, and a Mn content of less than 10%.

In the duplex stainless steel material of the present embodiment, among the inclusions contained in the steel material, the total number density (/$mm^2$) per unit area of Mn sulfides and Ca sulfides which have a size that is liable to dissolve in a supercritical corrosive environment and thereby form a hollow in the outer layer is made low.

Mn sulfides in the duplex stainless steel material extend in the longitudinal direction (rolling direction) of the duplex stainless steel material. On the other hand, Ca sulfides in the duplex stainless steel material are spherical. Therefore, a size that is liable to form a hollow which acts as a starting point of pitting differs between the Mn sulfides and the Ca sulfides.

A diameter obtained when the area of a Mn sulfide and a Ca sulfide, respectively, is converted into a circle is defined as the "equivalent circular diameter". In the case of a duplex stainless steel material in which the content of each element in the chemical composition is within the range of the present embodiment, the number per unit area (1 $mm^2$) of Mn sulfides having an equivalent circular diameter of 1.0 $\mu m$ or more and the number per unit area (1 $mm^2$) of Ca sulfides having an equivalent circular diameter of 2.0 $\mu m$ or more strongly correlate with the pitting resistance in a supercritical corrosive environment.

In the present description, among a plurality of Mn sulfides and a plurality of Ca sulfides in the steel material, the total of the number per unit area (1 $mm^2$) of Mn sulfides having an equivalent circular diameter of 1.0 $\mu m$ or more and the number per unit area (1 $mm^2$) of Ca sulfides having an equivalent circular diameter of 2.0 $\mu m$ or more is defined as "total number density ND" (unit is /$mm^2$).

In this case, in the steel material of the present embodiment, the total number density ND is 0.50 /$mm^2$ or less. In other words, the total number per 1 $mm^2$ of Mn sulfides having an equivalent circular diameter of 1.0 $\mu m$ or more and Ca sulfides having an equivalent circular diameter of 2.0 $\mu m$ or more is 0.50 /$mm^2$ or less.

If the total number density ND is more than 0.50 /mm$^2$, even if the duplex stainless steel material satisfies characteristic 1 and characteristic 2, Mn sulfides and Ca sulfides in the outer layer of the steel material will easily dissolve in a supercritical corrosive environment. Consequently, hollows that act as starting points of pitting will easily form on the surface of the duplex stainless steel material. Therefore, the pitting resistance of the duplex stainless steel material in a supercritical corrosive environment will decrease.

If the total number density ND is 0.50 /mm$^2$ or less, on the precondition that the duplex stainless steel material satisfies characteristic 1 and characteristic 2, the total number density of Mn sulfides and Ca sulfides having a size that is liable to dissolve in a supercritical corrosive environment will be sufficiently low. Therefore, in a supercritical corrosive environment, it will be difficult for hollows caused by dissolution of Mn sulfides and Ca sulfides to form in the outer layer of the duplex stainless steel material. As a result, the pitting resistance of the duplex stainless steel material in a supercritical corrosive environment will be sufficiently enhanced.

An upper limit of the total number density ND is preferably 0.49 /mm$^2$, more preferably 0.48 /mm$^2$, further preferably 0.47 /mm$^2$, further preferably 0.46 /mm$^2$, further preferably 0.45 /mm$^2$, further preferably 0.44 /mm$^2$, further preferably 0.43 /mm$^2$, and further preferably 0.42 /mm$^2$.

The total number density ND is preferably as low as possible. However, excessively reducing the total number density ND will markedly increase the production cost. Accordingly, when taking the production cost into consideration, a lower limit of the total number density ND is preferably 0.01 /mm$^2$, more preferably 0.05 /mm$^2$, further preferably 0.10 /mm$^2$, further preferably 0.15 /mm$^2$, and further preferably 0.20 /mm$^2$.

[Method for measuring total number density ND]

The total number density ND of Mn sulfides having an equivalent circular diameter of 1.0 $\mu$m or more and Ca sulfides having an equivalent circular diameter of 2.0 $\mu$m or more can be measured by the following method.

First, a test specimen is taken from the following test specimen extraction position in the duplex stainless steel material.

If the steel material is a steel pipe, the test specimen is taken from a center position of the wall thickness. If the steel material is a round steel bar, the test specimen is taken from an R/2 position. The term "round steel bar" refers to a solid-core steel material whose cross-section in a direction perpendicular to the axial direction is circular. The term "R/2 position" means the center position of a radius R in a cross section perpendicular to the axial direction of the round steel bar. If the steel material is a steel plate, the test specimen is taken from a center position of the plate thickness.

The obtained test specimen is embedded in resin. If the steel material is a steel pipe, a face of the surface of the test specimen which is a face including the pipe axis direction and wall thickness direction is adopted as an observation surface. If the steel material is a round steel bar, a face of the surface of the test specimen which is a face including the axial direction and radial direction is adopted as an observation surface. If the steel material is a steel plate, a face that includes the rolling direction and plate thickness direction is adopted as an observation surface.

The observation surface of the steel material that is embedded in resin is polished. An arbitrary 10 visual fields on the observation surface after polishing are observed. The area of each visual field is set to 36 mm$^2$ (6 mm $\times$ 6 mm).

In each visual field, the number of inclusions is determined. Specifically, each inclusion in the visual fields is subjected to an element concentration analysis (EDS analysis) to identify the type of inclusion. In the EDS analysis, the acceleration voltage is set to 20 kV, and N, O, Mg, Al, Si, P, S, Ca, Ti, Cr, Mn, Fe, Cu, Zr, and Nb are set as the elements to be analyzed.

Based on the EDS analysis result for each inclusion, it is identified whether the relevant inclusion is a Mn sulfide or a Ca sulfide.

If the inclusion has, in mass%, a Mn content of 10% or more and an S content of 10% or more, the inclusion is identified as a "Mn sulfide".

If the inclusion has, in mass%, a Ca content of 20% or more, an S content of 10% or more, and a Mn content of less than 10%, the inclusion is identified as a "Ca sulfide".

Among the Mn sulfides identified in the 10 visual fields, the total number of Mn sulfides having an equivalent circular diameter of 1.0 $\mu$m or more is determined. In addition, among the Ca sulfides measured in the 10 visual fields, the total number of Ca sulfides having an equivalent circular diameter of 2.0 $\mu$m or more is determined. The total number density ND (/mm$^2$) per unit area of Mn sulfides having an equivalent circular diameter of 1.0 $\mu$m or more and Ca sulfides having an equivalent circular diameter of 2.0 $\mu$m or more is then determined based on the total number of Mn sulfides having an equivalent circular diameter of 1.0 $\mu$m or more, the total number of Ca sulfides having an equivalent circular diameter of 2.0 $\mu$m or more, and the total area of the 10 visual fields.

Measurement of the total number density ND can be performed using an apparatus in which a scanning electron microscope is provided with a composition analysis function (SEM-EDS apparatus). For example, automated inclusion analysis equipment having the trade name "Metals Quality Analyzer" manufactured by FEI Company (ASPEX Corporation) can be used as the SEM-EDS apparatus.

[Microstructure]

The microstructure of the duplex stainless steel material according to the present embodiment consists of ferrite and austenite. As used herein, the phrase "consists of ferrite and austenite" means that the amount of any phase other than ferrite and austenite is negligibly small. For example, in the microstructure of the duplex stainless steel material according to the present embodiment, area fractions of precipitates and inclusions are negligibly small as compared with the area fractions of ferrite and austenite. That is, the microstructure of the duplex stainless steel material according to the present embodiment may contain minute amounts of precipitates, inclusions and the like, in addition to ferrite and austenite.

The area fraction of ferrite and the area fraction of austenite in the microstructure of the duplex stainless steel material of the present embodiment are not particularly limited. When the duplex stainless steel material satisfies characteristic 1, the area fraction of ferrite and the area fraction of austenite in the microstructure are naturally determined within a certain range. The area fraction of ferrite in the microstructure of the duplex stainless steel material of the present embodiment is, for example, 30 to 70%. The area fraction of austenite is, for example, 30 to 70%.

[Microstructure observation method]

In the present embodiment, the area fraction of ferrite and the area fraction of austenite in the duplex stainless steel material can be determined by the following method.

A test specimen is taken from the following test specimen extraction position of the duplex stainless steel material. If the steel material is a steel pipe, the test specimen is taken from a center position of the wall thickness. If the steel material is a round steel bar, the test specimen is taken from an R/2 position. If the steel material is a steel plate, the test specimen is taken from a center position of the plate thickness.

The obtained test specimen is embedded in resin. If the steel material is a steel pipe, a face of the surface of the test specimen which is a face that includes the pipe axis direction and wall thickness direction is adopted as an observation surface. If the steel material is a round steel bar, a face of the surface of the test specimen which is a face that includes the axial direction and radial direction is adopted as an observation surface. If the steel material is a steel plate, a face that includes the rolling direction and plate thickness direction is adopted as an observation surface.

The observation surface of the steel material that is embedded in resin is polished. The mirror-polished observation surface is electrolytically etched in a 7% potassium hydroxide etching solution to reveal the microstructure. The observation surface on which the microstructure has been revealed is observed in 10 visual fields using an optical microscope. The area of each visual field is not particularly limited, and for example is $6.25 \times 10^4$ $\mu m^2$ (magnification of $\times 400$).

In each visual field, ferrite and austenite are identified based on contrast. The area fractions of the identified ferrite and austenite are determined. The method for determining the area fractions of the identified ferrite and austenite is not particularly limited, and it suffices to use a well-known method. For example, the area fractions can be determined by image analysis. In the present embodiment, an arithmetic average value of the area fractions of ferrite determined in all of the visual field is defined as the area fraction (%) of ferrite. The area fraction of austenite is then determined based on the following formula.

$$\text{Area fraction (\%) of austenite} = 100 - \text{area fraction of ferrite (\%)}$$

[Advantageous effect of duplex stainless steel material of present embodiment]

As described above, the duplex stainless steel material of the present embodiment satisfies characteristic 1 to characteristic 3.

(Characteristic 1)

The content of each element in the chemical composition is within the range of the present embodiment.

(Characteristic 2)

Fn defined by Formula (1) is 57.0 or more.

$$Fn = Cr + 3.3(Mo + 0.5W) + 16N + 2Ni + Cu + 2Co + 10Sn ...(1)$$

Where, a content in mass% of a corresponding element is substituted for each symbol of an element in Formula (1).

(Characteristic 3)

The total number density ND of Mn sulfides having an equivalent circular diameter of 1.0 $\mu$m or more and Ca sulfides having an equivalent circular diameter of 2.0 $\mu$m or more is 0.50 /mm² or less.

By satisfying these characteristics, the duplex stainless steel material of the present embodiment has excellent general corrosion resistance and excellent pitting resistance in a supercritical corrosive environment.

[Regarding general corrosion resistance in a supercritical corrosive environment]

In the present description, exhibiting excellent general corrosion resistance in a supercritical corrosive environment means that the corrosion rate in a corrosion resistance test in a supercritical corrosive environment to be described later is 0.100 mm/yr or less.

[Regarding pitting resistance in supercritical corrosive environment]

In the present description, exhibiting excellent pitting resistance in a supercritical corrosive environment means that pitting on the surface of the duplex stainless steel material (test specimen) is not confirmed after performing a corrosion resistance test in a supercritical corrosive environment that is described later.

[Corrosion resistance test in supercritical corrosive environment]

A corrosion resistance test in a supercritical corrosive environment is conducted by the following method.

A test specimen is taken from a test specimen extraction position that is described hereunder of the duplex stainless steel material. If the duplex stainless steel material is a steel pipe, the test specimen is taken from a center position of the wall thickness. If the duplex stainless steel material is a round steel bar, the test specimen is taken from an R/2 position. If the duplex stainless steel material is a steel plate, the test specimen is taken from a center position of the plate thickness. Although the size of the test specimen is not particularly limited, for example the size is 30 mm in length, 20 mm in width, and 2 mm in thickness.

An aqueous solution containing 5 mass% of NaCl (sodium chloride) saturated with 0.25% $SO_2$ gas in vol% and 4.0% $O_2$ gas in vol% is prepared as a test solution. The test solution is placed into an autoclave. The test specimen is immersed in the test solution, and $CO_2$ gas at a total pressure of 130 bar and a temperature of 100°C (supercritical gas) is sealed under pressure in the autoclave, and the corrosion test is started. The test time period is set to 96 hours. Further, the temperature inside the autoclave during the test is maintained at 100°C.

The mass of the test specimen after the test time period has passed is measured. The corrosion rate (mm/yr) is determined based on the mass of the test specimen before starting the test, the mass of the test specimen after the test time period passed, the density of the test specimen, the surface area of the test specimen, and the test time period. If the corrosion rate is 0.100 mm/yr or less, it is determined that the test specimen is excellent in general corrosion resistance in a supercritical corrosive environment.

In addition, the surface of the test specimen after the test ends is observed using a magnifying glass with a magnification of $\times$ 10 to confirm the presence or absence of pitting. If a location where pitting is suspected is found by the observation with a magnifying glass, a cross section of the location where pitting is suspected is observed using an optical microscope with a magnification of $\times$100 to confirm the presence or absence of pitting. If pitting is not confirmed over the entire surface of the test specimen, it is determined that the test specimen is excellent in pitting resistance in a supercritical corrosive environment.

[Shape and uses of duplex stainless steel material]

The duplex stainless steel material according to the present embodiment is a steel pipe, a round steel bar (solid material), or a steel plate. The steel pipe may be a seamless steel pipe or may be a welded steel pipe. The duplex stainless steel material of the present embodiment is suitable, for example, for use in CCUS storage technology.

[Production method]

One example of a method for producing the duplex stainless steel material of the present embodiment will now be described. Note that, the production method described hereunder is one example, and a method for producing the duplex stainless steel material of the present embodiment is not limited to the following method. That is, as long as the duplex stainless steel material of the present embodiment that is composed as described above can be produced, a method for producing the duplex stainless steel material is not limited to the production method described hereunder. However, the production method described hereunder is a favorable method for producing the duplex stainless steel material of the present embodiment.

One example of the method for producing the steel material of the present embodiment includes the following steps.

(Step 1) Steelmaking step
(Step 2) Hot working step
(Step 3) Solution treatment step
Each step is described hereunder.

[(Step 1) Steelmaking step]

The steelmaking step includes the following steps.

(Step 11) Step of producing molten steel (refining step)

(Step 12) Step of producing a starting material by a casting process using molten steel (starting material production step)

[(Step 11) Refining step]

In the refining step, first, a molten steel containing Cr is placed in a ladle, and the molten steel in the ladle is subjected to a decarburization treatment under atmospheric pressure (rough decarburization refining step). Slag is generated by the decarburization treatment in the rough decarburization refining step. The slag generated by the decarburization treatment floats on the liquid surface of the molten steel after the rough decarburization refining step. In the rough decarburization refining step, Cr in the molten steel is oxidized to form $Cr_2O_3$. The $Cr_2O_3$ is absorbed by the slag. Therefore, a deoxidizer is added to the ladle to reduce $Cr_2O_3$ in the slag and recover Cr in the molten steel (Cr reduction treatment step).

The rough decarburization refining step and the Cr reduction treatment step are performed by, for example, an electric furnace process, a converter process, or an AOD (Argon Oxygen Decarburization) process. After the Cr reduction treatment step, the slag is removed from the molten steel (slag removal treatment step).

In the case of a steel material containing a large amount of Cr, such as the duplex stainless steel material, C activity in the molten steel is reduced by the Cr. Consequently, the decarburization reaction in the molten steel is suppressed. Therefore, the molten steel after the slag removal treatment step is further subjected to a finishing decarburization treatment (finishing decarburization refining step). In the finishing decarburization refining step, a decarburization treatment is performed under reduced pressure. If the decarburization treatment is performed under reduced pressure, the CO gas partial pressure (Pco) in the atmosphere is lowered, and oxidation of Cr in the molten steel is suppressed. Therefore, if the decarburization treatment is performed under reduced pressure, the C concentration in the molten steel can be further lowered while suppressing oxidation of Cr. After the finishing decarburization refining step, a deoxidizer is added to the molten steel, and the Cr reduction treatment for reducing $Cr_2O_3$ in the slag is performed again (Cr reduction treatment step).

The finishing decarburization refining step and the Cr reduction treatment step after the finishing decarburization refining step may be performed, for example, by the VOD (Vacuum Oxygen Decarburization) process or may be performed by the RH (Ruhrstahl-Heraeus) process.

After the Cr reduction treatment step, the molten steel in the ladle is subjected to final composition adjustment and to temperature adjustment of the molten steel before the starting material production step (composition adjustment step). The composition adjustment step is performed, for example, by LT (Ladle Treatment). Ca is added to the molten steel in the second half of the composition adjustment step. Here, the time from adding the Ca until the Ca is uniformly dispersed in the molten steel is defined as a "uniform mixing time" $\tau$. The uniform mixing time $\tau$ can be determined by the following Formula (A).

$$\tau = 800 \times \varepsilon^{-0.4} \ldots (A)$$

Where, $\varepsilon$ represents the stirring power density of the molten steel in the LT, and is defined by Formula (B).

$$\epsilon = 28.5(Q/W) \times T \times \log(1+H/1.48)...(B)$$

Where, Q represents the top blowing gas flow rate (Nm³/min), W represents the molten steel mass (t), T represents the molten steel temperature (K), and H represents the depth of molten steel in the ladle (steel bath depth) (m).

In the composition adjustment step, the temperature of the molten steel in the ladle is maintained in the range of 1500 to 1700°C. In addition, the holding time from when Ca is added to the molten steel and the uniform mixing time τ elapses is defined as "holding time t" (secs). In this case, in the present embodiment, the holding time t from when the uniform mixing time τ elapses is set to 60 seconds or more.

When the holding time t is less than 60 seconds, the Ca added to the molten steel cannot sufficiently modify the Mn sulfides in the molten steel. In this case, a large number of coarse Mn sulfides will remain in the steel material. Therefore, in the duplex stainless steel material, the number per unit area of Mn sulfides having an equivalent circular diameter of 1.0 μm or more will become excessively large. Consequently, the total number density ND will be more than 0.50 /mm². Alternatively, although Mn sulfides will react with Ca and modification will progress and the number per unit area of Mn sulfides having an equivalent circular diameter of 1.0 μm or more will be small, coarse Ca sulfides formed by combining with S will not be sufficiently absorbed by the slag and will remain in the molten steel. As a result, the total number density ND will be more than 0.50 /mm².

On the other hand, when the holding time t is 60 seconds or more, the Ca added to the molten steel sufficiently modifies Mn sulfides in the molten steel. As a result, the number of coarse Mn sulfides decreases. Therefore, the number per unit area of Mn sulfides having an equivalent circular diameter of 1.0 μm or more sufficiently decreases. Furthermore, sufficient time for coarse Ca sulfides formed by combining with S to float in the molten steel and be absorbed by the slag can be secured. Therefore, the number per unit area of Ca sulfides having an equivalent circular diameter of 2.0 μm or more also sufficiently decreases. As a result, the total number density ND (/mm²) is 0.50 /mm² or less.

As described above, in the composition adjustment step of the present embodiment, the holding time t from when the uniform mixing time τ elapsed is to be set to 60 seconds or more. Note that, in the composition adjustment step of the present embodiment, although an upper limit of the holding time t from when the uniform mixing time τ elapses is not particularly limited, for example the upper limit is 3600 seconds.

[(Step 12) Starting material production step]

A starting material (cast piece or ingot) is produced using the molten steel produced in the refining step described above. Specifically, a cast piece is produced by a continuous casting process using the molten steel. The cast piece may be a slab, may be a bloom, or may be a billet. Alternatively, an ingot may be produced by an ingot-making process using the molten steel. The cast piece or ingot may be further subjected to blooming or the like to produce a billet. A starting material is produced by the above-described process.

[(Step 2) Hot working step]

In the hot working step, the starting material is subjected to hot working to produce an intermediate steel material. If the duplex stainless steel material is a steel pipe, the intermediate steel material corresponds to a hollow shell. First, the starting material is heated in a heating furnace. Although not particularly limited, the heating temperature is, for example, 1100 to 1300°C.

A billet that is the starting material which is extracted from the heating furnace is subjected to hot working to produce a hollow shell (seamless steel pipe) that is an intermediate steel material. The method of hot working is not particularly limited, and it suffices to use a well-known method. For example, the Mannesmann process is performed as the hot working to produce a hollow shell. In this case, a billet is subjected to piercing-rolling using a piercing machine. When performing piercing-rolling, although not particularly limited, for example, the piercing ratio is 1.0 to 4.0.

The billet subjected to piercing-rolling is further subjected to hot rolling with a mandrel mill, a reducer, a sizing mill or the like to produce a hollow shell. The cumulative reduction of area in the hot working step is, for example, 20 to 70%.

In the case of performing hot extrusion as the hot working, for example, the Ugine-Sejournet process or the Ehrhardt push bench process may be performed to produce a hollow shell. Note that hot working may be performed only one time or may be performed multiple times. For example, after performing the aforementioned piercing-rolling on the starting material, the aforementioned hot extrusion may be performed.

If the steel material is a round steel bar, first, the starting material is heated in a heating furnace. Although not particularly limited, the heating temperature is, for example, 1100 to 1300°C. The starting material extracted from the heating furnace is subjected to hot working to produce a round steel bar that is an intermediate steel material. The hot working is, for example, blooming performed using a blooming mill, and/or hot rolling performed using a continuous mill. In a continuous mill, a horizontal stand having a pair of grooved rolls arranged one on the other in the vertical direction, and a vertical stand having a pair of grooved rolls arranged side by side in the horizontal direction are alternately arranged.

If the steel material is a steel plate, first, the starting material is heated in a heating furnace. Although not particularly limited, the heating temperature is, for example, 1100 to 1300°C. The starting material extracted from the heating furnace is subjected to hot rolling using a blooming mill and a continuous mill to produce a steel plate that is an intermediate steel material.

The intermediate steel material produced by the hot working may be cooled to normal temperature. The intermediate steel material produced by the hot working may also be subjected to supplementary heating (reheating) after the hot working without being cooled to normal temperature, and thereafter subjected to a solution treatment in the next step.

[(Step 3) Solution treatment step]

In the solution treatment step, the intermediate steel material produced by the aforementioned hot working step is subjected to a solution treatment. A method for performing the solution treatment is not particularly limited, and it suffices to perform a well-known method. For example, the intermediate steel material is charged into a heat treatment furnace, and after being held at a desired temperature, is rapidly cooled. Note that, in the case of performing a solution treatment by charging the intermediate steel material into a heat treatment furnace, holding the intermediate steel material at a desired temperature, and thereafter performing rapid cooling, the temperature at which the solution treatment is performed (solution treatment temperature) means the temperature (°C) of the heat treatment furnace for performing the solution treatment. In this case, in addition, the time for which the solution treatment is performed (solution treatment time) means the time for which the intermediate steel material is held at the solution treatment temperature.

Preferably, the solution treatment temperature in the solution treatment step of the present embodiment is set to 900 to 1200°C. In this case, it is difficult for precipitates (for example, a σ phase that is an intermetallic compound or the like) to remain in the duplex stainless steel material after the solution treatment.

When performing a solution treatment by charging the intermediate steel material into a heat treatment furnace, holding the intermediate steel material at a desired temperature, and thereafter performing rapid cooling, the solution treatment time is not particularly limited, and it suffices that it is in accordance with a well-known condition. The solution treatment time is, for example, 5 to 180 minutes. The rapid cooling method is, for example, water-cooling.

[Other steps]

The method for producing a duplex stainless steel material according to the present embodiment may include production steps other than the production steps described above. For example, cold working may be performed on the intermediate steel material at a stage that is after the hot working step and is before the solution treatment step. The cold working, for example, may be cold drawing or may be cold rolling. Further, cold working may be performed on the intermediate steel material after the solution treatment step.

A pickling treatment may be performed after the solution treatment step. In this case, the pickling treatment is not particularly limited, and it suffices that the pickling treatment is performed by a well-known method. When a pickling treatment is performed, a passivation film is formed on the surface of the produced duplex stainless steel material.

The duplex stainless steel material according to the present embodiment can be produced by performing the steps described above.

EXAMPLES

The advantageous effects of one aspect of the duplex stainless steel material of the present embodiment will now be described more specifically by way of examples. The conditions adopted in the following examples are one example of conditions which are employed for confirming the workability and advantageous effects of the duplex stainless steel material of the present embodiment. Accordingly, the duplex stainless steel material of the present embodiment is not limited to this one example of the conditions.

Duplex stainless steel materials (seamless steel pipes) having the chemical compositions shown in Table 1-1 and Table 1-2 were produced by the following method.

[Table 1-1]

TABLE 1-1

| Test Number | Chemical Composition (unit is mass%; balance is Fe and impurities) | | | | | | | | | | | | | |
|---|---|---|---|---|---|---|---|---|---|---|---|---|---|---|
| | Essential Elements | | | | | | | | | | | | | |
| | C | Si | Mn | P | S | Cr | Cu | Ni | Mo | W | N | Co | Sn | sol.Al |
| 1 | 0.014 | 0.33 | 0.49 | 0.024 | 0.0007 | 25.17 | 0.51 | 6.66 | 3.16 | 2.10 | 0.288 | 0.38 | 0.002 | 0.017 |
| 2 | 0.014 | 0.33 | 0.49 | 0.020 | 0.0002 | 25.17 | 0.51 | 6.66 | 3.16 | 2.10 | 0.288 | 0.36 | 0.003 | 0.009 |
| 3 | 0.013 | 0.34 | 0.49 | 0.018 | 0.0006 | 25.07 | 0.49 | 6.66 | 3.82 | 2.12 | 0.277 | 0.39 | 0.043 | 0.002 |
| 4 | 0.014 | 0.32 | 0.50 | 0.019 | 0.0005 | 25.01 | 0.50 | 8.32 | 2.50 | 2.12 | 0.273 | 0.23 | 0.001 | 0.013 |
| 5 | 0.023 | 0.29 | 0.65 | 0.030 | 0.0003 | 26.33 | 2.43 | 5.20 | 2.43 | 2.64 | 0.305 | 0.41 | 0.005 | 0.008 |
| 6 | 0.042 | 0.32 | 0.71 | 0.023 | 0.0005 | 25.03 | 1.05 | 5.53 | 3.15 | 2.69 | 0.302 | 0.17 | 0.005 | 0.020 |
| 7 | 0.046 | 0.24 | 0.51 | 0.023 | 0.0007 | 25.94 | 2.49 | 6.50 | 3.29 | 1.81 | 0.346 | 0.39 | 0.003 | 0.006 |
| 8 | 0.024 | 0.26 | 0.50 | 0.029 | 0.0006 | 26.89 | 1.01 | 7.75 | 3.35 | 2.28 | 0.283 | 0.42 | 0.002 | 0.014 |
| 9 | 0.050 | 0.35 | 0.61 | 0.017 | 0.0005 | 25.73 | 0.22 | 6.48 | 2.81 | 1.94 | 0.328 | 0.34 | 0.004 | 0.003 |
| 10 | 0.040 | 0.43 | 0.62 | 0.015 | 0.0003 | 26.38 | 0.41 | 7.78 | 3.81 | 2.11 | 0.276 | 0.34 | 0.004 | 0.018 |
| 11 | 0.043 | 0.32 | 0.45 | 0.028 | 0.0004 | 25.62 | 0.50 | 6.53 | 2.55 | 2.75 | 0.318 | 0.14 | 0.007 | 0.011 |
| 12 | 0.027 | 0.24 | 0.74 | 0.028 | 0.0002 | 25.49 | 0.90 | 6.59 | 4.37 | 1.97 | 0.339 | 0.12 | 0.007 | 0.017 |
| 13 | 0.045 | 0.37 | 0.61 | 0.021 | 0.0003 | 26.21 | 0.10 | 7.55 | 3.26 | 1.59 | 0.325 | 0.30 | 0.006 | 0.011 |
| 14 | 0.040 | 0.38 | 0.62 | 0.029 | 0.0003 | 25.22 | 1.32 | 7.34 | 3.57 | 2.80 | 0.311 | 0.27 | 0.004 | 0.011 |
| 15 | 0.029 | 0.23 | 0.76 | 0.019 | 0.0002 | 25.02 | 1.29 | 7.06 | 4.25 | 1.54 | 0.154 | 0.25 | 0.004 | 0.011 |
| 16 | 0.029 | 0.37 | 0.59 | 0.019 | 0.0003 | 26.05 | 0.72 | 6.83 | 2.55 | 2.00 | 0.346 | 0.39 | 0.007 | 0.014 |
| 17 | 0.047 | 0.32 | 0.71 | 0.022 | 0.0003 | 26.03 | 1.05 | 6.50 | 2.89 | 2.17 | 0.293 | 0.45 | 0.006 | 0.005 |
| 18 | 0.046 | 0.38 | 0.42 | 0.024 | 0.0007 | 25.92 | 1.17 | 5.47 | 3.14 | 2.68 | 0.310 | 0.10 | 0.005 | 0.007 |
| 19 | 0.013 | 0.32 | 0.50 | 0.019 | 0.0004 | 25.40 | 0.20 | 6.73 | 2.80 | 2.60 | 0.284 | 0.12 | 0.002 | 0.013 |
| 20 | 0.048 | 0.41 | 0.50 | 0.016 | 0.0005 | 25.92 | 1.37 | 6.92 | 3.09 | 2.41 | 0.294 | 0.25 | 0.001 | 0.001 |
| 21 | 0.013 | 0.38 | 0.60 | 0.027 | 0.0003 | 25.98 | 1.20 | 5.61 | 2.70 | 2.49 | 0.290 | 0.39 | 0.007 | 0.010 |
| 22 | 0.023 | 0.43 | 0.71 | 0.021 | 0.0003 | 25.87 | 1.03 | 5.52 | 2.68 | 2.74 | 0.255 | 0.23 | 0.004 | 0.023 |

(continued)

| Test Number | Chemical Composition (unit is mass%; balance is Fe and impurities) | | | | | | | | | | | | | |
| --- | --- | --- | --- | --- | --- | --- | --- | --- | --- | --- | --- | --- | --- | --- |
| | Essential Elements | | | | | | | | | | | | | |
| | C | Si | Mn | P | S | Cr | Cu | Ni | Mo | W | N | Co | Sn | sol.Al |
| 23 | 0.015 | 0.33 | 0.43 | 0.020 | 0.0002 | 25.36 | 0.60 | 6.20 | 300 | 2.40 | 0.266 | 0.19 | 0.002 | 0.012 |
| 24 | 0.021 | 0.35 | 0.45 | 0.022 | 0.0002 | 25.18 | 0.45 | 6.20 | 2.89 | 2.20 | 0.262 | 0.17 | 0.002 | 0.011 |
| 25 | 0.041 | 0.33 | 0.55 | 0.024 | 0.0002 | 25.50 | 1.94 | 5.95 | 3.09 | 2.23 | 0.340 | 0.05 | 0.006 | 0.006 |
| 26 | 0.047 | 0.24 | 0.46 | 0.027 | 0.0003 | 25.06 | 0.25 | 7.02 | 3.34 | 2.95 | 0.334 | 0.34 | - | 0.014 |
| 27 | 0.013 | 0.32 | 0.50 | 0.019 | 0.0004 | 21.01 | 0.20 | 6.73 | 4.30 | 2.14 | 0.284 | 0.12 | 0.002 | 0.013 |
| 28 | 0.014 | 0.31 | 0.51 | 0.017 | 0.0003 | 26.20 | - | 6.77 | 3.01 | 2.14 | 0.286 | 0.16 | 0.001 | 0.024 |
| 29 | 0.014 | 0.32 | 0.49 | 0.017 | 0.0004 | 25.54 | 0.51 | 5.98 | 2.98 | 2.43 | 0.307 | 0.16 | 0.002 | 0.023 |
| 30 | 0.019 | 0.27 | 0.75 | 0.015 | 0.0002 | 26.21 | 0.65 | 5.51 | 3.26 | 2.52 | 0.263 | 0.33 | 0.003 | 0.006 |
| 31 | 0.030 | 0.32 | 0.56 | 0.020 | 0.0003 | 25.87 | 0.70 | 5.54 | 3.22 | 2.85 | 0.270 | 0.23 | 0.004 | 0.005 |
| 32 | 0.025 | 0.37 | 0.54 | 0.020 | 0.0003 | 25.60 | 0.70 | 5.54 | 3.45 | 2.75 | 0.270 | 0.21 | 0.004 | 0.004 |

[Table 1-2]

TABLE 1-2

| Test Number | Chemical Composition (unit is mass%; balance is Fe and impurities) | | | | | | | | | | | | | Fn |
| --- | --- | --- | --- | --- | --- | --- | --- | --- | --- | --- | --- | --- | --- | --- |
| | Essential Elements | | | | | Optional Elements | | | | | | | | |
| | | | | | | First Group | | Second Group | | Third Group | | | | |
| | V | Ti | Ca | B | O | Mg | REM | Zr | Nb | As | Zn | Pb | Sb | |
| 1 | 0.07 | 0.006 | 0.0028 | 0.0022 | 0.0015 | - | - | - | - | - | - | - | - | 58.3 |
| 2 | 0.06 | 0.005 | 0.0011 | 0.0026 | 0.0012 | - | - | - | - | - | - | - | - | 58.2 |
| 3 | 0.05 | 0.005 | 0.0030 | 0.0025 | 0.0022 | - | - | - | - | - | - | - | - | 60.6 |
| 4 | 0.04 | 0.006 | 0.0021 | 0.0030 | 0.0022 | - | - | - | - | - | - | - | - | 58.7 |
| 5 | 0.02 | 0.006 | 0.0028 | 0.0034 | 0.0020 | - | - | - | - | - | - | - | - | 57.3 |
| 6 | 0.13 | 0.001 | 0.0022 | 0.0024 | 0.0031 | 0.0015 | - | - | - | - | - | - | - | 57.2 |
| 7 | 0.06 | 0.003 | 0.0028 | 0.0037 | 0.0030 | - | 0.0009 | - | - | - | - | - | - | 61.6 |
| 8 | 0.15 | 0.007 | 0.0025 | 0.0029 | 0.0008 | - | - | 0.0012 | - | - | - | - | - | 63.6 |
| 9 | 0.14 | 0.004 | 0.0024 | 0.0036 | 0.0020 | - | - | - | 0.110 | - | - | - | - | 57.4 |
| 10 | 0.05 | 0.006 | 0.0012 | 0.0035 | 0.0012 | - | - | - | - | 0.0001 | - | - | - | 63.5 |
| 11 | 0.02 | 0.005 | 0.0019 | 0.0021 | 0.0033 | - | - | - | - | - | 0.0019 | - | - | 57.6 |
| 12 | 0.10 | 0.004 | 0.0021 | 0.0020 | 0.0042 | - | - | - | - | - | - | 0.0001 | - | 63.0 |
| 13 | 0.07 | 0.001 | 0.0018 | 0.0023 | 0.0012 | - | - | - | - | - | - | - | 0.0023 | 60.7 |
| 14 | 0.05 | 0.001 | 0.0030 | 0.0022 | 0.0021 | - | - | - | - | - | - | - | - | 63.2 |
| 15 | 0.07 | 0.005 | 0.0026 | 0.0024 | 0.0014 | - | - | - | - | - | - | - | - | 60.0 |
| 16 | 0.11 | 0.005 | 0.0015 | 0.0025 | 0.0012 | - | - | - | - | - | - | - | - | 58.5 |
| 17 | 0.11 | 0.005 | 0.0028 | 0.0040 | 0.0022 | - | - | - | - | - | - | - | - | 58.8 |
| 18 | 0.02 | 0.001 | 0.0030 | 0.0022 | 0.0031 | - | - | - | - | - | - | - | - | 58.0 |
| 19 | 0.07 | 0.001 | 0.0023 | 0.0026 | 0.0016 | - | - | - | - | - | - | - | - | 57.4 |
| 20 | 0.12 | 0.005 | 0.0030 | 0.0032 | 0.0034 | - | - | - | - | - | - | - | - | 60.5 |
| 21 | 0.12 | 0.006 | 0.0019 | 0.0033 | 0.0025 | - | - | - | - | - | - | - | - | 56.9 |

EP 4 414 472 A1

(continued)

| Test Number | Chemical Composition (unit is mass%; balance is Fe and impurities) | | | | | | | | | | | | | Fn |
| | Essential Elements | | | | | Optional Elements | | | | | | | | |
| | | | | | | First Group | | Second Group | | Third Group | | | | |
| | V | Ti | Ca | B | O | Mg | REM | Zr | Nb | As | Zn | Pb | Sb | |
| 22 | 0.10 | 0.005 | 0.0017 | 0.0028 | 0.0013 | - | - | - | - | - | - | - | - | 55.9 |
| 23 | 0.08 | 0.002 | 0.0028 | 0.0025 | 0.0023 | 0.0021 | - | - | - | - | - | - | - | 56.3 |
| 24 | 0.09 | 0.002 | 0.0028 | 0.0021 | 0.0022 | - | - | - | 0.080 | - | - | - | - | 55.3 |
| 25 | 0.03 | 0.001 | 0.0028 | 0.0033 | 0.0022 | - | - | - | - | - | - | - | - | 58.8 |
| 26 | 0.14 | 0.002 | 0.0022 | 0.0036 | 0.0010 | - | - | - | - | - | - | - | - | 61.3 |
| 27 | 0.07 | 0.001 | 0.0023 | 0.0026 | 0.0016 | - | - | - | - | - | - | - | - | 57.2 |
| 28 | 0.05 | 0.002 | 0.0021 | 0.0021 | 0.0018 | - | - | - | - | - | - | - | - | 58.1 |
| 29 | 0.05 | 0.002 | 0.0024 | 0.0036 | 0.0022 | - | - | - | - | - | - | - | - | 57.1 |
| 30 | 0.02 | 0.004 | 0.0010 | 0.0038 | 0.0033 | - | - | - | - | - | - | - | - | 57.7 |
| 31 | 0.10 | 0.003 | 0.0020 | 0.0040 | 0.0023 | 0.0023 | - | - | - | - | - | - | - | 57.1 |
| 32 | 0.09 | 0.005 | 0.0020 | 0.0040 | 0.0034 | - | - | - | - | - | 0.0023 | - | - | 57.4 |

The symbol "-" in the column "Chemical Composition" in Table 1-1 and Table 1-2 means that the corresponding element content is 0% in significant figures (numerical value to the least significant digit) defined in the embodiment. In other words, the symbol "-" means that the corresponding element content is 0% when a fraction in the significant figures (numerical value to the least significant digit) defined in the above-described embodiment is rounded off.

Molten steels of respective test numbers were produced as follows. A molten steel containing Cr was placed in a ladle, and a well-known rough decarburization refining step and Cr reduction treatment step were performed by the AOD process. After the Cr reduction treatment step, a slag removal treatment step in which slag was removed from the molten steel was performed. In addition, a well-known finishing decarburization refining step and Cr reduction treatment step were performed by the VOD process.

After the Cr reduction treatment step was performed by the VOD process, LT was performed to subject the molten steel in the ladle to final composition adjustment and to adjust the temperature of the molten steel before the starting material production step. In each test number, the molten steel temperature was 1500 to 1700°C. In addition, Ca was added to the molten steel. The holding time t (secs) after the uniform mixing time $\tau$ elapsed after adding Ca was adjusted as shown in Table 2. A molten steel of each test number was produced by the foregoing process.

[Table 2]

TABLE 2

| Test Number | Holding Time t (secs) | Total Number Density ND (/mm$^2$) | Corrosion Rate (mm/yr) | Presence/ Absence of Pitting | Remarks |
|---|---|---|---|---|---|
| 1 | 128 | 0.44 | 0.025 | Absent | Inventive Example |
| 2 | 154 | 0.33 | 0.042 | Absent | Inventive Example |
| 3 | 114 | 0.47 | 0.034 | Absent | Inventive Example |
| 4 | 102 | 0.43 | 0.021 | Absent | Inventive Example |
| 5 | 106 | 0.47 | 0.039 | Absent | Inventive Example |
| 6 | 118 | 0.47 | 0.021 | Absent | Inventive Example |
| 7 | 125 | 0.39 | 0.027 | Absent | Inventive Example |
| 8 | 139 | 0.36 | 0.025 | Absent | Inventive Example |
| 9 | 120 | 0.34 | 0.032 | Absent | Inventive Example |
| 10 | 122 | 0.38 | 0.033 | Absent | Inventive Example |
| 11 | 170 | 0.33 | 0.042 | Absent | Inventive Example |
| 12 | 88 | 0.46 | 0.033 | Absent | Inventive Example |
| 13 | 104 | 0.44 | 0.020 | Absent | Inventive Example |
| 14 | 92 | 0.47 | 0.037 | Absent | Inventive Example |

(continued)

| Test Number | Holding Time t (secs) | Total Number Density ND (/mm$^2$) | Corrosion Rate (mm/yr) | Presence/ Absence of Pitting | Remarks |
|---|---|---|---|---|---|
| 15 | 117 | 0.46 | 0.043 | Absent | Inventive Example |
| 16 | 138 | 0.38 | 0.021 | Absent | Inventive Example |
| 17 | 85 | 0.47 | 0.038 | Absent | Inventive Example |
| 18 | 115 | 0.39 | 0.024 | Absent | Inventive Example |
| 19 | 202 | 0.24 | 0.030 | Absent | Inventive Example |
| 20 | 187 | 0.30 | 0.020 | Absent | Inventive Example |
| 21 | 166 | 0.33 | 0.126 | - | Comparative Example |
| 22 | 152 | 0.31 | 0.132 | - | Comparative Example |
| 23 | 120 | 0.33 | 0.111 | Absent | Comparative Example |
| 24 | 120 | 0.32 | 0.123 | Absent | Comparative Example |
| 25 | 126 | 0.38 | 0.020 | Present | Comparative Example |
| 26 | 169 | 0.31 | 0.020 | Present | Comparative Example |
| 27 | 202 | 0.24 | 0.133 | - | Comparative Example |
| 28 | 166 | 0.31 | 0.115 | - | Comparative Example |
| 29 | 56 | 0.53 | 0.003 | Present | Comparative Example |
| 30 | 37 | 1.09 | 0.021 | Present | Comparative Example |
| 31 | 40 | 0.85 | 0.041 | Present | Comparative Example |
| 32 | 55 | 0.60 | 0.030 | Present | Comparative Example |

A billet having an outer diameter of 310 mm was produced using the molten steel. The produced billet was heated to 1250°C, and thereafter was subjected to hot rolling by the Mannesmann process to produce a hollow shell (seamless steel pipe) having an outer diameter of 244.48 mm, and a wall thickness of 13.84 mm.

The hollow shell was subjected to a solution treatment. The solution treatment temperature was 1080°C, and the solution treatment time was set to 15 minutes. After the solution treatment time elapsed, the hollow shell was water-cooled. A steel material (seamless steel pipe) of each test number was produced by the foregoing process.

[Evaluation tests]

The steel material of each test number was subjected to the following evaluation tests:

(Test 1) Microstructure observation test
(Test 2) Total Number density ND measurement test
(Test 3) Corrosion resistance test in supercritical corrosive environment
Each test is described hereunder.

[(Test 1) Microstructure observation test]

Observation of the microstructure of the duplex stainless steel material of each test number was performed based on the above-described [Microstructure observation method]. The area of each visual field of the 10 visual fields was set to $6.25 \times 10^4$ $\mu$m$^2$. The test results showed that the microstructure of the steel material of all the test numbers was a microstructure consisting of ferrite and austenite. Further, in each test number, the ferrite area fraction in the microstructure was 30 to 70%.

[(Test 2) Total Number density ND measurement test]

Measurement of the total number density ND of the duplex stainless steel material of each test number was performed based on the above-described [Method for measuring total number density ND]. The obtained total number density ND (/mm$^2$) is shown in the column " Total Number Density ND (/mm$^2$)" in Table 2.

[(Test 3) Corrosion resistance test in supercritical corrosive environment]

The duplex stainless steel material of each test number was subjected to a corrosion resistance test described in the above-described [Corrosion resistance test in supercritical corrosive environment], and the corrosion rate (mm/yr) was determined. Note that the size of the test specimen was 30 mm in length, 20 mm in width, and 2 mm in thickness. The obtained corrosion rate (mm/yr) is shown in the column "Corrosion Rate (mm/yr)" in Table 2. In addition, the presence or absence of pitting on the surface of the test specimen after the corrosion resistance test was confirmed by the method described above. The result determined regarding the presence or absence of pitting is shown in the column "Presence/Absence of Pitting" in Table 2. In Table 2, "Absent" means that pitting was not confirmed on any of the surfaces of the test specimen. "Present" means that pitting was confirmed on any one or more surfaces of the test specimen. Note that, in a case where the corrosion rate was more than 0.100 mm/yr, it was difficult to confirm the presence or absence of pitting because general corrosion of the steel material surface had progressed. Therefore, confirmation of the presence or absence of pitting was not performed for the duplex stainless steel materials of the test numbers for which the corrosion rate was more than 0.100 mm/yr. In the column "Presence/Absence of Pitting" in Table 2, the symbol "-" means that confirmation of the presence or absence of pitting was not performed.

[Evaluation results]

Referring to Table 1-1, Table 1-2 and Table 2, in the duplex stainless steel materials of Test Numbers 1 to 20, the content of each element in the chemical composition was appropriate. In addition, Fn was 57.0 or more. Furthermore, the total number density ND of Mn sulfides having an equivalent circular diameter of 1.0 $\mu$m or more and Ca sulfides having an equivalent circular diameter of 2.0 $\mu$m or more was 0.50 /mm$^2$ or less. As a result, in the corrosion resistance test in a supercritical corrosive environment, the corrosion rate was 0.100 mm/yr or less, and thus excellent general corrosion resistance was exhibited in a supercritical corrosive environment. In addition, pitting was not confirmed on the surface of the test specimen after the test, and thus excellent pitting resistance was exhibited in a supercritical corrosive environment.

On the other hand, in Test Numbers 21 to 24, in the chemical composition of the duplex stainless steel material, Fn defined by Formula (1) was less than 57.0. Therefore, in the corrosion resistance test in a supercritical corrosive environment, the corrosion rate was faster than 0.100 mm/yr, and thus the general corrosion resistance in a supercritical corrosive environment was low.

In Test Number 25, in the chemical composition of the duplex stainless steel material, the Co content was too low. Therefore, in the corrosion resistance test in a supercritical corrosive environment, pitting was confirmed on the surface of the test specimen after the test, and thus the pitting resistance in a supercritical corrosive environment was low.

In Test Number 26, in the chemical composition of the duplex stainless steel material, the Sn content was too low. Therefore, in the corrosion resistance test in a supercritical corrosive environment, pitting was confirmed on the surface of the test specimen after the test, and thus the pitting resistance in a supercritical corrosive environment was low.

In Test Number 27, in the chemical composition of the duplex stainless steel material, the Cr content was too low. Therefore, in the corrosion resistance test in a supercritical corrosive environment, the corrosion rate was faster than 0.100 mm/yr, and thus the general corrosion resistance in a supercritical corrosive environment was low.

In Test Number 28, in the chemical composition of the duplex stainless steel material, the Cu content was too low. Therefore, in the corrosion resistance test in a supercritical corrosive environment, the corrosion rate was faster than 0.100 mm/yr, and thus the general corrosion resistance in a supercritical corrosive environment was low.

In Test Numbers 29 to 32, in the steel material production process, the holding time t after the uniform mixing time $\tau$ elapsed was too short. As a result, the total number density ND of Mn sulfides having an equivalent circular diameter of 1.0 $\mu$m or more and Ca sulfides having an equivalent circular diameter of 2.0 $\mu$m or more was more than 0.50 /mm$^2$. Consequently, in the corrosion resistance test in a supercritical corrosive environment, pitting was confirmed on the surface of the test specimen after the test, and thus the pitting resistance in a supercritical corrosive environment was low.

An embodiment of the present disclosure has been described above. However, the embodiment described above is merely an example for carrying out the present disclosure. Therefore, the present disclosure is not limited to the above-described embodiment, and can be implemented by appropriately modifying the above-described embodiment within a range not departing from the spirit thereof.

The gist of the duplex stainless steel material of the present embodiment can also be described as follows.

A duplex stainless steel material consisting of, in mass%,

C: 0.050% or less,
Si: 1.00% or less,
Mn: 0.80% or less,
P: 0.050% or less,
S: 0.0050% or less,
Cr: 25.00 to 27.00%,
Cu: 0.10 to 2.50%,
Ni: 5.00 to 8.50%,
Mo: 2.00 to 4.50%,
W: 1.50 to 3.00%,
N: 0.150 to 0.350%,
Co: 0.10 to 1.00%,
Sn: 0.001 to 0.050%,
sol. Al: 0.050% or less,
V: 0.01 to 0.50%,
Ti: 0.001 to 0.050%,
Ca: 0.0010 to 0.0100%,
B: 0.0020 to 0.0050%, and
O: 0.0100% or less,
with the balance being Fe and impurities,
wherein:

on a precondition that a content of each of the elements is within a range described above, Fn defined by Formula (1) is 57.0 or more; and
in the duplex stainless steel material,
a total number per 1 mm$^2$ of Mn sulfides having a Mn content of 10% or more in mass%, an S content of 10% or more in mass%, and an equivalent circular diameter of 1.0 $\mu$m or more, and Ca sulfides having a Ca content of 20% or more in mass%, an S content of 10% or more in mass%, a Mn content of less than 10% in mass%, and an equivalent circular diameter of 2.0 $\mu$m or more is 0.50 /mm$^2$ or less;

$$Fn = Cr+3.3(Mo+0.5W)+16N+2Ni+Cu+2Co+10Sn...(1)$$

where, a content in mass% of a corresponding element is substituted for each symbol of an element in Formula (1).

[2] A duplex stainless steel material containing, in mass%,

C: 0.050% or less,
Si: 1.00% or less,
Mn: 0.80% or less,
P: 0.050% or less,
S: 0.0050% or less,
Cr: 25.00 to 27.00%,
Cu: 0.10 to 2.50%,
Ni: 5.00 to 8.50%,
Mo: 2.00 to 4.50%,
W: 1.50 to 3.00%,
N: 0.150 to 0.350%,
Co: 0.10 to 1.00%,
Sn: 0.001 to 0.050%,
sol. Al: 0.050% or less,
V: 0.01 to 0.50%,
Ti: 0.001 to 0.050%,
Ca: 0.0010 to 0.0100%,
B: 0.0020 to 0.0050%, and
O: 0.0100% or less,
and further containing one or more types of element selected from the group consisting of a first group to a third group, with the balance being Fe and impurities,
wherein:

on a precondition that a content of each of the elements is within a range described above, Fn defined by Formula (1) is 57.0 or more; and
in the duplex stainless steel material,
a total number per 1 $mm^2$ of Mn sulfides having a Mn content of 10% or more in mass%, an S content of 10% or more in mass%, and an equivalent circular diameter of 1.0 $\mu$m or more, and Ca sulfides having a Ca content of 20% or more in mass%, an S content of 10% or more in mass%, a Mn content of less than 10% in mass%, and an equivalent circular diameter of 2.0 $\mu$m or more is 0.50 /$mm^2$ or less;
[first group]
one or more types of element selected from the group consisting of:

Mg: 0.0100% or less, and
rare earth metal: 0.0100% or less,
[second group]
one or more types of element selected from the group consisting of:

Zr: 0.0100% or less, and
Nb: 0.500% or less,
[third group]
one or more types of element selected from the group consisting of:

As: 0.0500% or less,
Zn: 0.0100% or less,
Pb: 0.0100% or less, and
Sb: 0.0100% or less;
Fn = Cr+3.3(Mo+0.5W)+16N+2Ni+Cu+2Co+10Sn...(1)
where, a content in mass% of a corresponding element is substituted for each symbol of an element in Formula (1).

[3] The duplex stainless steel material according to [2], containing:
the first group.
[4] The duplex stainless steel material according to [2] or [3], containing:
the second group.
[5] The duplex stainless steel material according to any one of [2] to [4], containing:

the third group.
[6] The duplex stainless steel material according to any one of [1] to [5], wherein:
the duplex stainless steel material is a steel pipe.

**Claims**

1. A duplex stainless steel material consisting of, in mass%,

C: 0.050% or less,
Si: 1.00% or less,
Mn: 0.80% or less,
P: 0.050% or less,
S: 0.0050% or less,
Cr: 25.00 to 27.00%,
Cu: 0.10 to 2.50%,
Ni: 5.00 to 8.50%,
Mo: 2.00 to 4.50%,
W: 1.50 to 3.00%,
N: 0.150 to 0.350%,
Co: 0.10 to 1.00%,
Sn: 0.001 to 0.050%,
sol. Al: 0.050% or less,
V: 0.01 to 0.50%,
Ti: 0.001 to 0.050%,
Ca: 0.0010 to 0.0100%,
B: 0.0020 to 0.0050%,
O: 0.0100% or less,
Mg: 0 to 0.0100%,
rare earth metal: 0 to 0.0100%,
Zr: 0 to 0.0100%,
Nb: 0 to 0.500%,
As: 0 to 0.0500%,
Zn: 0 to 0.0100%,
Pb: 0 to 0.0100%,
Sb: 0 to 0.0100%, and
with the balance being Fe and impurities,
wherein:

on a precondition that a content of each of the elements is within a range described above, Fn defined by Formula (1) is 57.0 or more; and
in the duplex stainless steel material,
a total number per 1 mm$^2$ of Mn sulfides having a Mn content of 10% or more in mass%, an S content of 10% or more in mass%, and an equivalent circular diameter of 1.0 $\mu$m or more, and Ca sulfides having a Ca content of 20% or more in mass%, an S content of 10% or more in mass%, a Mn content of less than 10% in mass%, and an equivalent circular diameter of 2.0 $\mu$m or more is 0.50 /mm$^2$ or less;

$$Fn = Cr+3.3(Mo+0.5W)+16N+2Ni+Cu+2Co+10Sn...(1)$$

where, a content in mass% of a corresponding element is substituted for each symbol of an element in Formula (1).

2. The duplex stainless steel material according to claim 1, containing one or more types of element selected from the group consisting of:

Mg: 0.0001 to 0.0100%,
rare earth metal: 0.0001 to 0.0100%,

Zr: 0.0001 to 0.0100%,
Nb: 0.001 to 0.500%,
As: 0.0001 to 0.0500%,
Zn: 0.0001 to 0.0100%,
Pb: 0.0001 to 0.0100%, and
Sb: 0.0001 to 0.0100%.

3. The duplex stainless steel material according to claim 1 or claim 2, wherein:
   the duplex stainless steel material is a steel pipe.

FIG. 1

## INTERNATIONAL SEARCH REPORT

| International application No. |
| --- |
| **PCT/JP2022/037065** |

**A. CLASSIFICATION OF SUBJECT MATTER**

*C22C 38/00*(2006.01)i; *C22C 38/60*(2006.01)i; *C21C 7/068*(2006.01)n; *C21D 8/10*(2006.01)n; *C21D 9/08*(2006.01)n
FI: C22C38/00 302H; C22C38/60; C21C7/068; C21D8/10 D; C21D9/08 E

According to International Patent Classification (IPC) or to both national classification and IPC

**B. FIELDS SEARCHED**

Minimum documentation searched (classification system followed by classification symbols)

C22C38/00-38/60; C21C7/068; C21D8/10; C21D9/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2016-216816 A (KOBE STEEL, LTD.) 22 December 2016 (2016-12-22) | 1-3 |
| A | JP 2013-253315 A (KOBE STEEL, LTD.) 19 December 2013 (2013-12-19) | 1-3 |
| A | WO 2018/131412 A1 (JFE STEEL CORP.) 19 July 2018 (2018-07-19) | 1-3 |

| ☐ Further documents are listed in the continuation of Box C. | ☑ See patent family annex. |
| --- | --- |

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| --- | --- |

| Date of the actual completion of the international search | Date of mailing of the international search report |
| --- | --- |
| **28 November 2022** | **06 December 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/037065**

| Patent document cited in search report | | | Publication date (day/month/year) | Patent family member(s) | | Publication date (day/month/year) |
|---|---|---|---|---|---|---|
| JP | 2016-216816 | A | 22 December 2016 | (Family: none) | | |
| JP | 2013-253315 | A | 19 December 2013 | (Family: none) | | |
| WO | 2018/131412 | A1 | 19 July 2018 | US | 2019/0352752 A1 | |
| | | | | EP | 3569725 A1 | |
| | | | | CN | 110168124 A | |
| | | | | MX | 2019008238 A | |
| | | | | BR | 112019013808 A2 | |
| | | | | AR | 110821 A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5132741 A

- JP 9195003 A